# EUROPEAN PATENT SPECIFICATION

(11) **EP 4 529 155 B1**
(45) Date of publication and mention of the grant of the patent: **22.04.2026**
(21) Application number: 22967230.8
(22) Date of filing: 02.12.2022
(51) Int. Cl.: H04N 7/18, G06V 10/26, G06V 10/75

(54) **SEARCH ASSISTANCE DEVICE, SEARCH ASSISTANCE SYSTEM, SEARCH ASSISTANCE METHOD, AND PROGRAM**
SUCHHILFEVORRICHTUNG, SUCHHILFESYSTEM, SUCHHILFEVERFAHREN UND PROGRAMM
DISPOSITIF D'AIDE À LA RECHERCHE, SYSTÈME D'AIDE À LA RECHERCHE, PROCÉDÉ D'AIDE À LA RECHERCHE ET PROGRAMME

(43) Date of publication of application: 26.03.2025
(73) Proprietor: MITSUBISHI ELECTRIC CORPORATION, Chiyoda-ku Tokyo 100-8310 (JP)
(72) Inventor: FUKUI Noriyuki, Tokyo 100-8310 (JP); TAIRA Akinori, Tokyo 100-8310 (JP)
(74) Representative: Pfenning, Meinig & Partner mbB
(86) International application number: PCT/JP2022/044520
(87) International publication number: WO 2024/116400

(56) References cited:
- DE-T5- 112023 000 900
- JP-A- 2007 272 436
- JP-A- 2010 237 804
- JP-A- 2011 204 111
- JP-A- 2012 080 221
- JP-B2- 6 622 886
- US-A1- 2010 250 588

## Description

### TECHNICAL FIELD

The present disclosure relates to a search assistance device, a search assistance system, a search assistance method, and a program.

### BACKGROUND ART

In the related art, there are known technologies for searching for objects or people in remote locations. For example, Patent Document 1 discloses a technology for imaging a subject using a multi-lens camera and applying a vector median filter to remove unwanted objects from an image in which characters are partially obstructed. Patent Document 2 discloses a technology for extracting a target person from an image and using images taken at a plurality of points to specify the person even in a case where part of the person's image is missing due to an obstacle. Non Patent Document 1 discloses a technology for improving the visibility of a target object by integrating images from a visible light camera and an invisible light camera.

### Citation List

### Patent Documents

Patent Document 1: Japanese Unexamined Patent Application, First Publication No. 2019-24258
Patent Document 2: Japanese Unexamined Patent Application, First Publication No. 2018-93423
Patent Document 3: JP 6 622886 B2

### Non Patent Document

Non Patent Document 1: NEC Corporation, Tokyo Institute of Technology, "NEC and Tokyo Institute of Technology jointly develop "multi-modal image fusion technology" that uses AI to dramatically improve visibility under poor conditions - automatic combining of visible and invisible light images", [online], June 5, 2017, [Retrieved on June 20, 2022], Internet <URL: https://www.titech.ac.jp/news/pdf/webtokyotechpr20170605_okutomi.pdf>

### SUMMARY OF INVENTION

### Technical Problem

The above-mentioned technologies use images captured by a multi-lens camera, images taken at a plurality of points, or a plurality of types of images to search for target objects in remote locations, but there are cases where only images captured in specific directions can be acquired due to limitations on the number of cameras and the like in remote locations. In a case where a search target object is hidden by a peripheral object in an image captured in a specific direction, there is a likelihood that the search target object cannot be detected.

The present disclosure has been made to solve the above-mentioned problems, and an object of the present disclosure is to provide a search assistance device, a search assistance system, a search assistance method, and a program that are capable of detecting a search target object with a high probability even if the search target object is hidden by a peripheral object.

### Solution to Problem

The invention is set out in the independent claims.

According to a first aspect, there is provided a search assistance device including: a captured video acquisition unit configured to acquire a captured video; an object information acquisition unit configured to acquire object information indicating an object included in the captured video; a setting unit configured to set a search target image including a search target object; a determination unit configured to determine whether or not part of a search target candidate is hidden by a peripheral object using the search target image or the object information; and a video creation unit configured to create a comparison video to be compared to search for the search target object using an image that shows the peripheral object in the captured video in a case where the determination unit determines that part of the search target candidate is hidden by the peripheral object.

According to a second aspect, there is provided a search assistance method including: a step of setting a search target image including a search target object; a step of acquiring a captured video and object information indicating an object included in the captured video; a step of determining whether or not part of a search target candidate is hidden by a peripheral object using the search target image or the object information; and a step of creating a comparison video to be compared to search for the search target object using an image that shows the peripheral object in the captured video in a case where it is determined that part of the search target candidate is hidden by the peripheral object.

According to a third aspect, there is provided a program causing a computer mounted on a search assistance device to execute: a step of setting a search target image including a search target object; a step of acquiring a captured video and object information indicating an object included in the captured video; a step of determining whether or not part of a search target candidate is hidden by a peripheral object using the search target image or the object information; and a step of creating a comparison video to be compared to search for the search target object using an image that shows the peripheral object in the captured video in a case where it is determined that part of the search target candidate is hidden by the peripheral object.

According to a fourth aspect, there is provided a search assistance system including: an imaging device configured to generate a captured video; an object information generation device configured to generate object information indicating an object included in the captured video; and a search assistance device including a setting unit configured to set a search target image including a search target object, a determination unit configured to determine whether or not part of a search target candidate is hidden by a peripheral object using the search target image or the object information, and a video creation unit configured to create a comparison video to be compared to search for the search target object using an image that shows the peripheral object in the captured video in a case where the determination unit determines that part of the search target candidate is hidden by the peripheral object.

### Advantageous Effects of Invention

According to the present disclosure, a search target object can be detected with a high probability even if the search target object is hidden by a peripheral object.

### BRIEF DESCRIPTION OF DRAWINGS

[FIG. 1] A block diagram showing an example of a search assistance system according to a first embodiment.
[FIG. 2] A block diagram showing an example of a functional configuration of a search assistance device according to the first embodiment.
[FIG. 3] A diagram for describing a process performed by the search assistance device according to the first embodiment.
[FIG. 4] A flowchart showing an example of a processing procedure in the search assistance device according to the first embodiment.
[FIG. 5] A block diagram showing an example of a functional configuration of a search assistance device according to a second embodiment.
[FIG. 6] A diagram for describing a process performed by the search assistance device according to the second embodiment.
[FIG. 7] A flowchart showing an example of a processing procedure in the search assistance device according to the second embodiment.
[FIG. 8] A block diagram showing an example of a functional configuration of a search assistance device according to a third embodiment.
[FIG. 9] A diagram for describing a process performed by the search assistance device according to the third embodiment.
[FIG. 10] A flowchart showing an example of a processing procedure in the search assistance device according to the third embodiment.
[FIG. 11] A diagram for describing a modification example of the search assistance system.
[FIG. 12] A block diagram showing an example of a functional configuration of a search assistance device according to a fourth embodiment.
[FIG. 13] A diagram for describing a process performed by the search assistance device according to the fourth embodiment.
[FIG. 14] A flowchart showing an example of a processing procedure in the search assistance device according to the fourth embodiment.
[FIG. 15] A diagram for describing a modification example of the search assistance device according to the fourth embodiment.

### DESCRIPTION OF EMBODIMENTS

Embodiments of the present disclosure will be described below with reference to the drawings. The scope of the present disclosure is not limited to the following embodiments and can be changed in any way within the scope of technical ideas of the present disclosure. For example, images in the embodiments may be replaced with videos, and videos in the embodiments may be replaced with images. In addition, in the following drawings, the scale and the number in each structure may be different from the scale and the number in the actual structure to facilitate understanding of each configuration.

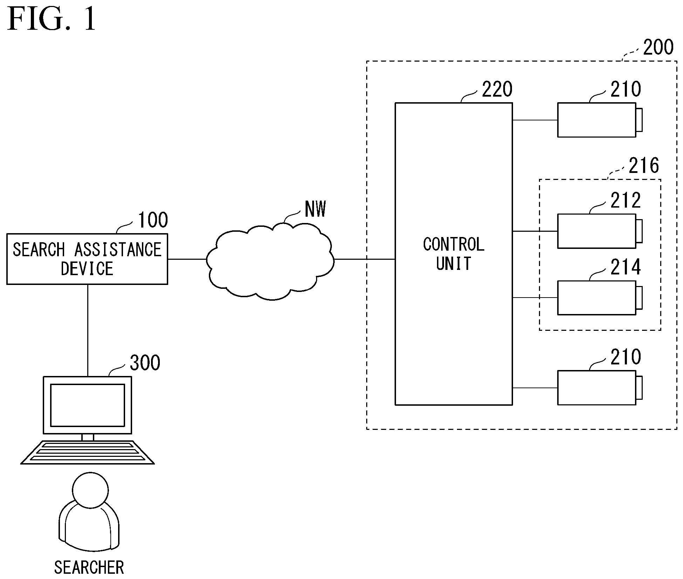

FIG. 1 is a block diagram showing an example of a search assistance system according to a first embodiment. The search assistance system includes, for example, a search assistance device 100, a camera system 200, and a searcher's terminal device 300. The search assistance device 100 and the searcher's terminal device 300 are installed, for example, in a management room that manages search targets such as lost items in a search area. The camera system 200 is disposed in a search area at a remote location away from the search assistance device 100 and the searcher's terminal device 300. The search assistance device 100 and the camera system 200 are connected via, for example, a network NW such as the Internet. In the present embodiment, the search assistance device 100, the camera system 200, and the searcher's terminal device 300 are shown as separate devices, but the present disclosure is not limited thereto. A single information processing device may have the functions of the search assistance device 100 and the functions of the searcher's terminal device 300, and the camera system 200 may have the functions of the search assistance device 100.

The search assistance device 100 performs processing to assist the search of a search target object. The search assistance device 100 may be configured, for example, to be connected to a plurality of camera systems 200 and a plurality of searcher's terminal devices 300 and to provide a cloud service that assists the search of a search target object. The search target object may be, for example, an item lost in a store, but the present disclosure is not limited thereto and the search target object may be a person such as a lost child.

The searcher's terminal device 300 is an information processing device such as a personal computer or a smartphone that is operated by a searcher who searches for a search target object. The searcher's terminal device 300 includes an operation interface that receives operations by the searcher, a display interface that presents various types of information to the searcher, a storage device, and a control unit such as a central processing unit (CPU) that performs various processes.

The camera system 200 is provided in the search area. The search area is, for example, a store such as a shopping mall or a restaurant, but the present disclosure is not limited thereto. The camera system 200 includes a plurality of camera devices 210, an object information generation device 216, and a control unit 220. The object information generation device 216 is, for example, an infrared camera device 212 and a radar device 214. The camera device 210 generates a captured video of the search area. The camera device 210 generates a captured video by emitting visible light. For example, one or more camera devices 210 are installed in one search area. Each of the camera devices 210 generates a captured video of the search area viewed from each installation location. In the present embodiment, the camera device 210 generates a video that is temporally continuous, but the present disclosure is not limited thereto, and the camera device 210 may generate images that are not temporally continuous. Further, in the present embodiment, the object information generation device 216 includes the infrared camera device 212 and the radar device 214 but is not limited thereto and may have another configuration as long as it is capable of generating object information as described below.

The object information generation device 216 acquires object information indicating an object included in the captured video. The infrared camera device 212 generates an infrared video as object information by emitting infrared light. The radar device 214 irradiates a search area with pulses of laser light and measures the reflected light to measure distance information to an object as object information.

The object information is information indicating a two-dimensional or three-dimensional shape of the search target object. Specifically, the object information is information indicating a two-dimensional or three-dimensional shape of the search target object or a peripheral object group including one peripheral object or a plurality of peripheral objects that hide part of the search target object. For example, in a case where the object information generation device 216 is an infrared camera device 212, the object information is information indicating a two-dimensional shape. In a case where the object information generation device 216 is a radar device 214, the object information is information indicating a three-dimensional shape acquired by, for example, swinging the transmission direction of a radar transmission signal vertically and horizontally. For example, in a case where the object information generation device 216 is an infrared camera device 212, an object information acquisition unit 108 of the search assistance device 100 to be described later acquires object information of a search target by distinguishing between the search target and peripheral objects that hide the search target from a perspective image. In a case where the object information generation device 216 is a radar device 214, the object information acquisition unit 108 of the search assistance device 100 to be described later acquires object information of a search target by distinguishing between the search target and peripheral objects that hide the search target based on differences in distance information.

The control unit 220 controls the camera device 210, the infrared camera device 212, and the radar device 214. The control unit 220 operates the camera device 210, the infrared camera device 212, and the radar device 214 in time synchronization. Accordingly, the control unit 220 acquires a captured video and object information that are synchronized in time. The control unit 220 transmits the captured video and object information synchronized in time to the search assistance device 100. The control unit 220 may perform camera control such as changing an imaging direction and zooming an imaging range of the camera device 210, the infrared camera device 212, or the radar device 214 based on the operation of the searcher, for example.

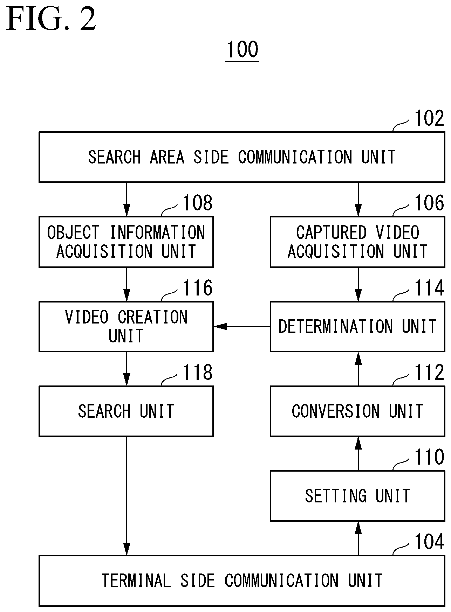

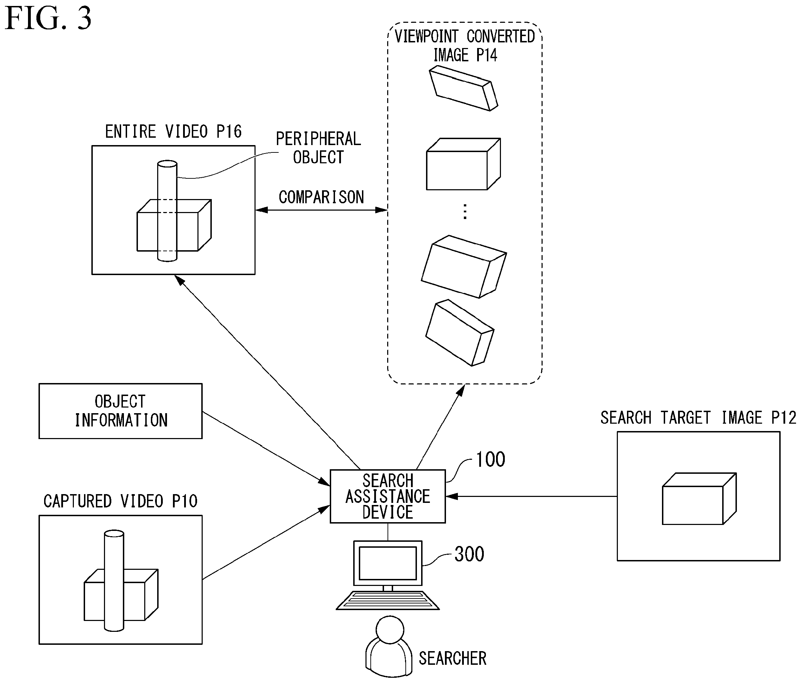

FIG. 2 is a block diagram showing an example of a functional configuration of the search assistance device 100 according to the first embodiment. FIG. 3 is a diagram for describing a process performed by the search assistance device 100 according to the first embodiment.

The search assistance device 100 includes, for example, a search area side communication unit 102, a terminal side communication unit 104, a captured video acquisition unit 106, an object information acquisition unit 108, a setting unit 110, a conversion unit 112, a determination unit 114, a video creation unit 116, and a search unit 118. The search area side communication unit 102 is a communication interface such as a network interface card (NIC) or a wireless communication module for connecting to the network NW. The terminal side communication unit 104 is a communication interface that performs communication via, for example, a LAN line. Each unit, such as the captured video acquisition unit 106, the object information acquisition unit 108, the setting unit 110, the conversion unit 112, the determination unit 114, the video creation unit 116, and the search unit 118, is realized by a computer, such as a CPU mounted on the search assistance device 100, executing a program stored in a program memory.

The captured video acquisition unit 106 acquires a captured video P10. The captured video P10 is supplied via the search area side communication unit 102. The captured video acquisition unit 106 stores, for example, search area information indicating the search area, camera information that uniquely specifies the camera device 210, and a captured video in a storage device (not shown) in association with each other.

The object information acquisition unit 108 acquires object information indicating an object included in the captured video P10. The object information is supplied via the search area side communication unit 102.

The object information includes object information of the search target and object information of peripheral objects. The object information acquisition unit 108 stores, for example, search area information indicating the search area, device information that uniquely specifies the infrared camera device 212 or the radar device 214, and object information in a storage device (not shown) in association with each other. The object information acquisition unit 108 may store the acquired object information in association with the search area information or the device information.

The setting unit 110 sets a search target image P12 including a search target object input via the terminal side communication unit 104. The search target image P12 is, for example, a still image viewed from a specific viewpoint and provided by a person (search requester) requesting a search for a search target, such as an image of a lost item or an image of the face of a lost child. The setting unit 110 may acquire, as the search target image P12, an image uploaded to the search assistance device 100 from another device, such as a smartphone of a search requester, for example.

The conversion unit 112 converts the search target image P12 set by the setting unit 110 into viewpoint converted images P14 viewed from optional viewpoints. The conversion unit 112 may generate one viewpoint converted image P14 from the search target image P12 or may generate a plurality of viewpoint converted images P14. The conversion unit 112 may, for example, cut out an area including the search target included in the search target image P12 and perform image processing such as angle correction, rotation, and size change on the area including the search target to create a viewpoint converted image P14 in which the viewpoint of the search target is converted. The conversion unit 112 may, for example, predict a portion of the search target image P12 where the search target does not appear and create a viewpoint converted image P14 in which the viewpoint of the search target is converted by combining the predicted portion with an area including the search target included in the search target image P12. The conversion unit 112 may predict the shape or the like of the search target by searching a search site or the like for objects similar to the search target based on the product name information of the search target, for example.

The determination unit 114 determines whether or not part of a search target candidate is hidden by a peripheral object by using the search target image P12 or the object information. The search target candidate may be any object included in the captured video P10. The determination unit 114 may compare the viewpoint converted image P14 obtained by converting the search target image P12 with an object included in the captured video P10, thereby detecting an object included in the captured video P10 that matches one of the viewpoint converted images P14 as a search target candidate and determine whether or not part of the detected search target candidate is hidden by a peripheral object. The determination unit 114 may determine whether or not the search target candidates overlap based on the object information, thereby determining whether or not part of an object included in the captured video P10 is hidden by a peripheral object. The determination unit 114 may determine whether or not part of the object information is missing, thereby determining whether or not part of an object included in the captured video P10 is hidden by a peripheral object. The search target candidate is, for example, an object included in the captured video P10 that matches at least one of the search target image P12 and one or more viewpoint converted images P14.

In a case where the determination unit 114 determines that part of the search target candidate is hidden by a peripheral object, the video creation unit 116 creates a comparison video to be compared in order to search for the search target object using an image showing the peripheral object in the captured video P10. The video creation unit 116 creates, for example, an entire video P16 representing the entirety of the search target candidate as a comparison video. The video creation unit 116 interpolates the portions hidden by peripheral objects by, for example, viewing through the peripheral objects using infrared images acquired by the infrared camera device 212. The video creation unit 116 uses the distance image acquired by the radar device 214 to specify portions of peripheral objects and interpolates the portions of the peripheral objects. Accordingly, the video creation unit 116 creates the entire video P16.

The search unit 118 searches for the search target object by comparing the entire video P16 created by the video creation unit 116 with the viewpoint converted image P14 converted by the conversion unit 112. The search unit 118 transmits the search results to the searcher's terminal device 300 via the terminal side communication unit 104. For example, in a case where a search target candidate is found, the search unit 118 may transmit the captured video P10 including the search target candidate, position information of the search target candidate, and the like as search results. Accordingly, the searcher can visually recognize the search target by displaying the captured video P10 and by checking the video from the camera device 210 which captures the position of the search target candidate, thereby enabling the searcher to search for the search target.

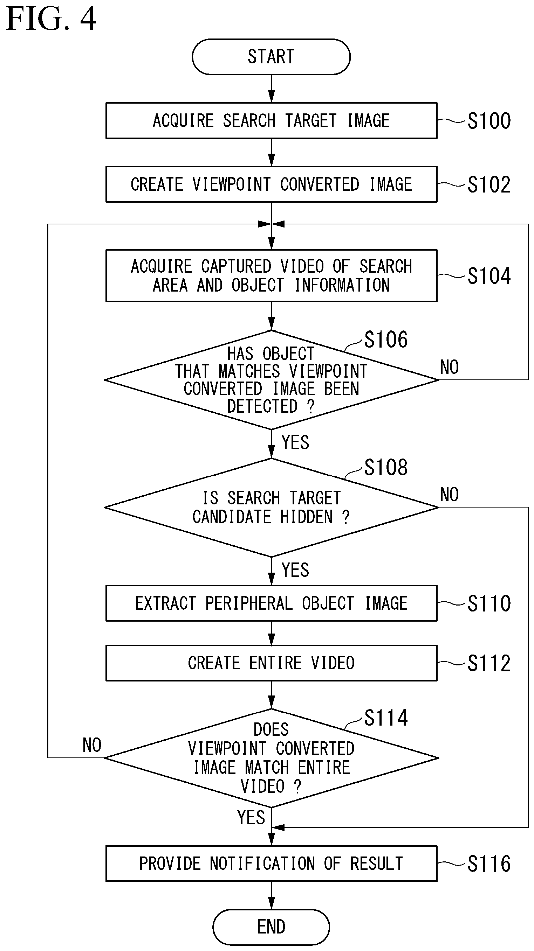

FIG. 4 is a flowchart showing an example of a processing procedure in the search assistance device 100 according to the first embodiment. First, the terminal side communication unit 104 acquires the search target image P12 from the searcher's terminal device 300, and the setting unit 110 sets the search target image P12 (step S100). Next, the conversion unit 112 creates a viewpoint converted image P14 from the search target image P12 (step S102). Next, the captured video acquisition unit 106 acquires the captured video P10 of the search area from the camera system 200, and the object information acquisition unit 108 acquires object information (step S104). Next, the determination unit 114 determines whether or not an object (search target candidate) that matches the viewpoint converted image P14 has been detected among objects included in the captured video P10 (step S106). Note that the determination unit 114 may determine that a search target candidate matching the viewpoint converted image P14 has been detected in a case where the search target candidate matches the viewpoint converted image P14 with a degree of match greater than or equal to a predetermined reference value. That is, the determination unit 114 is not limited to determining whether or not all the images match but may determine whether or not only parts of the images match. The reference value is desirably a value making it possible to, for example, recognize that an object included in the captured video P10 and the viewpoint converted image P14 are the same target object, but may be a value that is appropriately changed by the searcher. In a case where the determination unit 114 does not detect an object that matches the viewpoint converted image P14 (step S106: NO), it returns the process to step S104 and the search continues.

In a case where the determination unit 114 has detected a search target candidate that matches the viewpoint converted image P14 (step S106: YES), it determines whether or not part of the search target candidate is hidden by a peripheral object (step S108). In a case where the determination unit 114 determines that part of the search target candidate is not hidden by a peripheral object (step S108: NO), the determination unit 114 provides a notification of the search result (step S116). In a case where it is determined that part of the search target candidate is hidden by a peripheral object (step S108: YES), the video creation unit 116 cuts out and extracts an image including an image showing the peripheral object (peripheral object image) (step S110) and creates an entire video P16 in which the entire search target candidate can be checked using the peripheral object image (step S112). The video creation unit 116 recognizes portions of the image showing the search target candidate that are hidden by the peripheral objects based on the peripheral object images and interpolates the portions of the image showing the search target candidate that are hidden by the peripheral objects using object information.

Next, the search unit 118 determines whether or not the viewpoint converted image P14 matches the entire video P16 (step S114). In a case where the search unit 118 does not detect the viewpoint converted image P14 that matches the entire video P16 (step S114: NO), it returns the process to step S104. In a case where the search unit 118 has detected the viewpoint converted image P14 that matches the entire video P16 (step S114: YES), the search unit 118 provides a notification of the search result (step S116). In step S116, the search unit 118 transmits, for example, an image showing the search target candidate that was the source of the entire video P16, position information of the search target candidate, and the like, to the searcher's terminal device 300 as the search result.

As described above, with the search assistance device 100 according to the first embodiment, the captured video P10 and object information are acquired, and it is determined whether or not part of the search target candidate is hidden by a peripheral object. In a case where it is determined that part of the search target candidate is hidden by a peripheral object, the entire video P16 representing the entirety of the search target candidate can be created using the object information. In a case where a search target candidate is hidden by a peripheral object, it is highly possible that the true search target cannot be searched for with a high probability. Furthermore, in a case where the number of camera devices 210 is limited, it is highly possible that the true search target cannot be searched for. In contrast, with the search assistance device 100 according to the first embodiment, in a case where a search target candidate detected based on a comparison between the captured video P10 and the viewpoint converted image P14 is hidden by a peripheral object, the entire video P16 can be created using the object information. Accordingly, the search assistance device 100 can transmit, for example, the entire video P16 to the searcher's terminal device 300 to show the entire video P16 to the searcher, and thus, the searcher can search whether the search target candidate is the true search target. As a result, with the search assistance device 100 according to the first embodiment, the search target object can be detected with a high probability even if the search target object is hidden by a peripheral object.

In the first embodiment, the search assistance system includes the infrared camera device 212 or the radar device 214 to acquire object information and can create an entire video P16 using the object information acquired by the infrared camera device 212 or the radar device 214. Accordingly, the search assistance system and the search assistance device 100 can create an entire video P16 by performing processing such as interpolating portions of the search target candidates that are hidden by peripheral objects.

With the search assistance device 100 according to the first embodiment, the search assistance device 100 may convert the search target image P12 into viewpoint converted images P14 viewed from optional viewpoints and compare the viewpoint converted images P14 with the object included in the captured video P10, thereby detecting an object included in the captured video P10 that matches one of the viewpoint converted images P14 as a search target candidate. With the search assistance device 100 according to the first embodiment, the search unit 118 that searches for a search target object by comparing the entire video P16 with the viewpoint converted image P14 is provided. Therefore, the search target object can be searched for even if the search target object is hidden by peripheral objects.

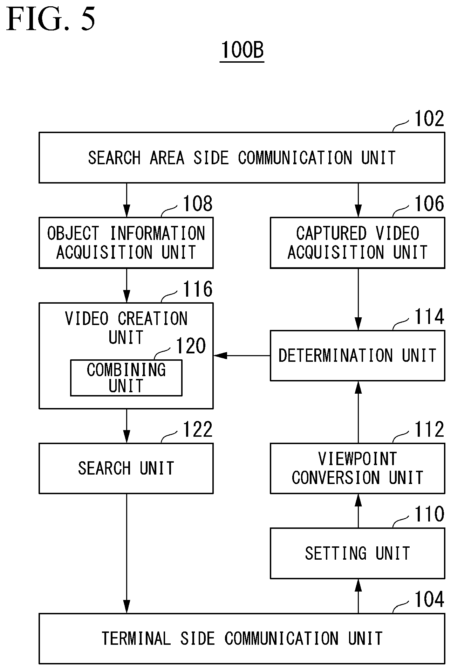

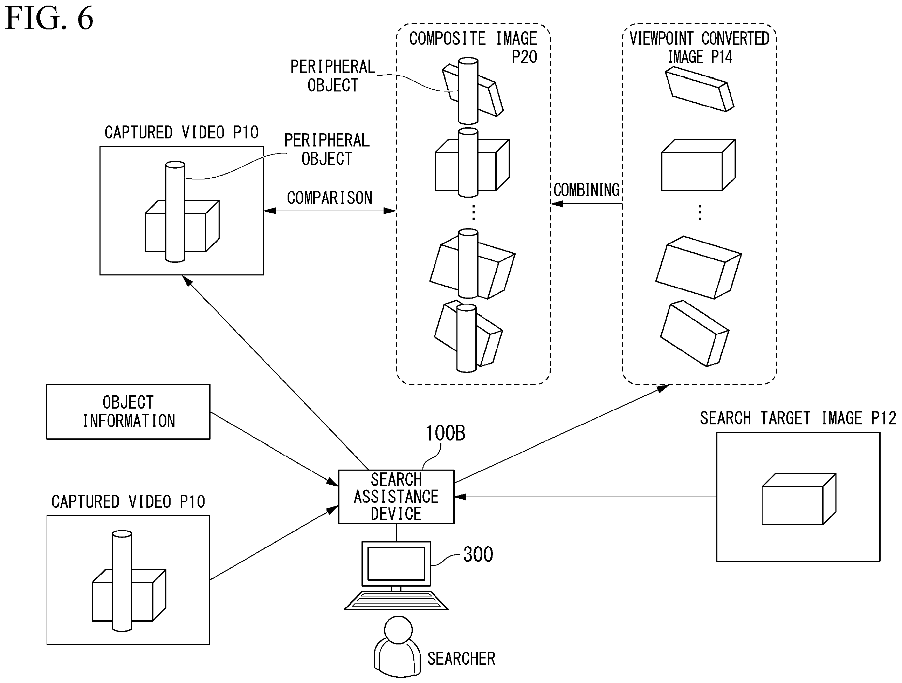

A second embodiment will be described below. FIG. 5 is a block diagram showing an example of a functional configuration of a search assistance device 100B according to the second embodiment. FIG. 6 is a diagram for describing a process performed by the search assistance device 100B according to the second embodiment. The search assistance device 100B according to the second embodiment differs from the first embodiment in that the search assistance device 100B creates a composite image P20 by combining an image of a peripheral object that is hiding part of the search target candidate with the viewpoint converted image P14 and searches for the search target object by comparing the created composite image P20 with an object included in the captured video P10. The following description will focus on the differences.

In the search assistance device 100B, as shown in FIG. 5, the video creation unit 116 includes a combining unit 120 that creates, as a comparison video, a composite image by combining an image showing a peripheral object that is hiding part of a search target candidate with a converted image. The composite image in the second embodiment corresponds to the comparison video to be compared in order to search for the search target object in the first embodiment. Furthermore, the search assistance device 100B according to the second embodiment includes a search unit 122 that searches for target candidates by comparing an object included in the captured video with the composite image created by the combining unit 120.

As shown in FIG. 6, the combining unit 120 creates a plurality of viewpoint converted images P14 from the search target image P12, creates a plurality of composite images P20 by combining peripheral object images with each of the created viewpoint converted images P14, and uses these as a comparison video. The composite image P20 may be an image or a video, for example, a still image, or a video including a plurality of images that are temporally continuous. The combining unit 120, for example, cuts out and extracts an image including a peripheral object image from the captured video P10 using object information of the peripheral objects and creates a composite image P20 by superimposing the extracted peripheral object image on the viewpoint converted image P14. The search unit 118 compares the composite image P20 with the captured video P10. Accordingly, the search unit 122 can detect a search target candidate in a case where at least one of the composite images P20 matches a search target candidate included in the captured video P10.

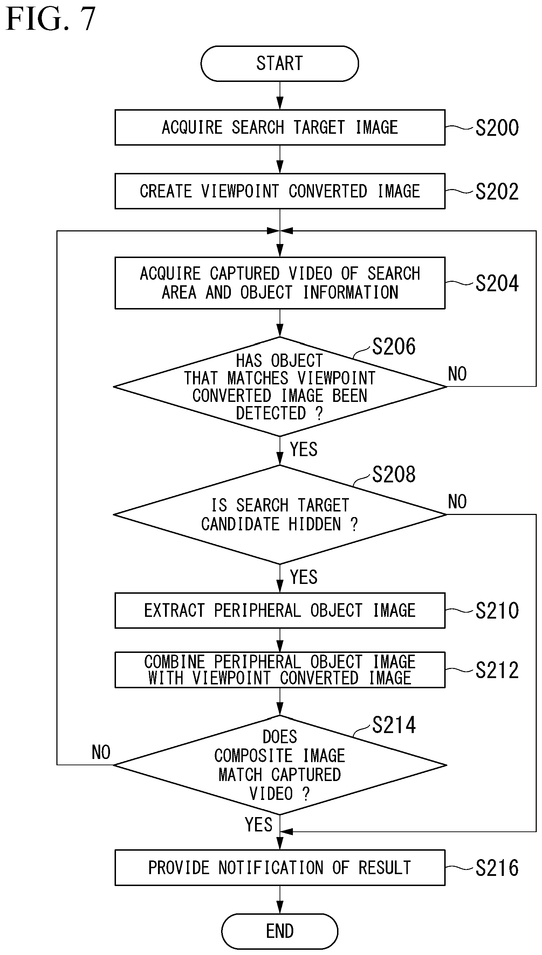

FIG. 7 is a flowchart showing an example of a processing procedure in the search assistance device 100B according to the second embodiment. First, the terminal side communication unit 104 and the setting unit 110 acquire the search target image P12 from the searcher's terminal device 300 (step S200). Next, the conversion unit 112 creates a viewpoint converted image P14 from the search target image P12 (step S202). Next, the search area side communication unit 102 and the object information acquisition unit 108 acquire the captured video P10 of the search area from the camera system 200 and acquire object information (step S204). Next, the determination unit 114 determines whether or not an object that matches the viewpoint converted image P14 has been detected among objects included in the captured video P10 (step S206). In a case where the determination unit 114 does not detect an object that matches the viewpoint converted image P14 (step S206: NO), it returns the process to step S204 and the search continues.

In a case where the determination unit 114 has detected an object (search target candidate) that matches the viewpoint converted image P14 (step S206: YES), it determines whether or not the search target candidate is hidden by a peripheral object (step S208). In a case where the search target candidate is not hidden by a peripheral object (step S208: NO), the determination unit 114 provides a notification of the search result (step S216). In a case where the search target candidate is hidden by a peripheral object (step S208: YES), the combining unit 120 cuts out and extracts an image including an image showing the peripheral object (peripheral object image) (step S210) and creates a composite video P20 by combining the peripheral object image with the viewpoint converted image P14 (step S212).

Next, the search unit 122 determines whether or not the composite image P20 matches the captured video P10 (step S214). In a case where the composite image P20 does not match the captured video P10 (step S214: NO), the search unit 122 returns the process to step S204. In a case where the composite image P20 matches the captured video P10 (step S214: YES), the search unit 122 provides a notification of the search result (step S216). The search unit 122 transmits, for example, an image showing the search target candidate that matches the composite image P20, position information of the search target candidate, and the like, to the searcher's terminal device 300 as the search result.

The search assistance device 100B according to the second embodiment includes the combining unit 120 that creates a composite image P20 by combining an image of a peripheral object that is hiding part of the search target candidate with the viewpoint converted image P14 and the search unit 122 that searches for the search target object by comparing an object included in the captured video P10 with the composite image P20 created by the combining unit 120. Accordingly, with the search assistance device 100B, the search target object can be detected with a high probability even if the search target object is hidden by a peripheral object.

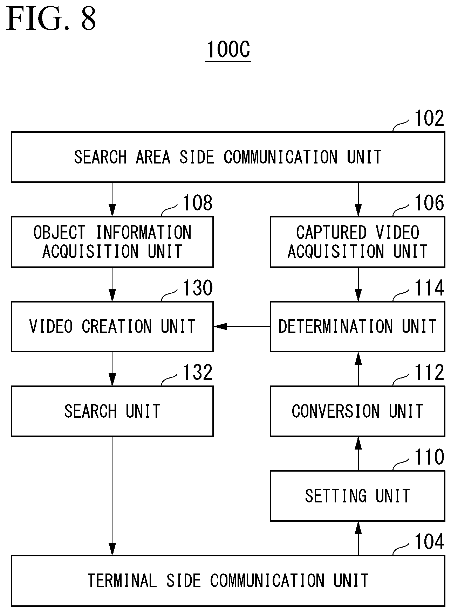

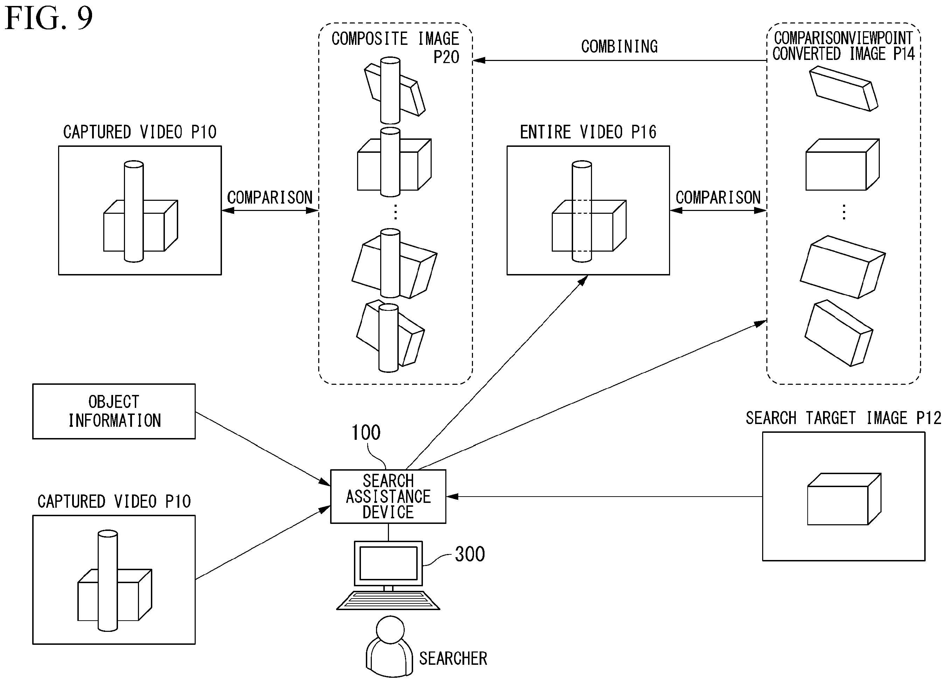

A third embodiment will be described below. FIG. 8 is a block diagram showing an example of a functional configuration of a search assistance device 100C according to the third embodiment. FIG. 9 is a diagram for describing a process performed by the search assistance device 100C according to the third embodiment. The search assistance device 100C according to the third embodiment performs both a process of comparing the entire video P16 with the viewpoint converted image P14 as in the first embodiment and a process of comparing the composite image P20 with the captured video P10 as in the second embodiment. Accordingly, the search assistance device 100C according to the third embodiment can detect the search target object with an even higher probability.

The video creation unit 130 creates an entire video P16 from the captured video P10 and the object information, in which the entire search target candidate can be checked, and further creates a composite image P20a by combining an image of a peripheral object included in the captured video P10 with the viewpoint converted image P14. The search unit 132 compares the entire video P16 with the viewpoint converted image P14 as in the first embodiment and also compares the composite image P20a with the captured video P10 as in the second embodiment. The search unit 132 searches for a search target object based on a comparison result between the entire video P20a and the viewpoint converted image P14 and a comparison result between the composite image P20a and the captured video P10. The search unit 132 may determine that the search target object has been found, for example, in a case where both a similarity between the entire video P20 and the viewpoint converted image P14 and a similarity between the composite image P20a and the captured video P10 are greater than or equal to a reference. The search unit 132 may provide a notification indicating that the search target object may have been found, for example, in a case where one of the similarity between the entire video P20 and the viewpoint converted image P14 and the similarity between the composite image P20a and the captured video P10 is greater than or equal to a reference. Accordingly, the search assistance device 100C can search for a search target object with higher accuracy.

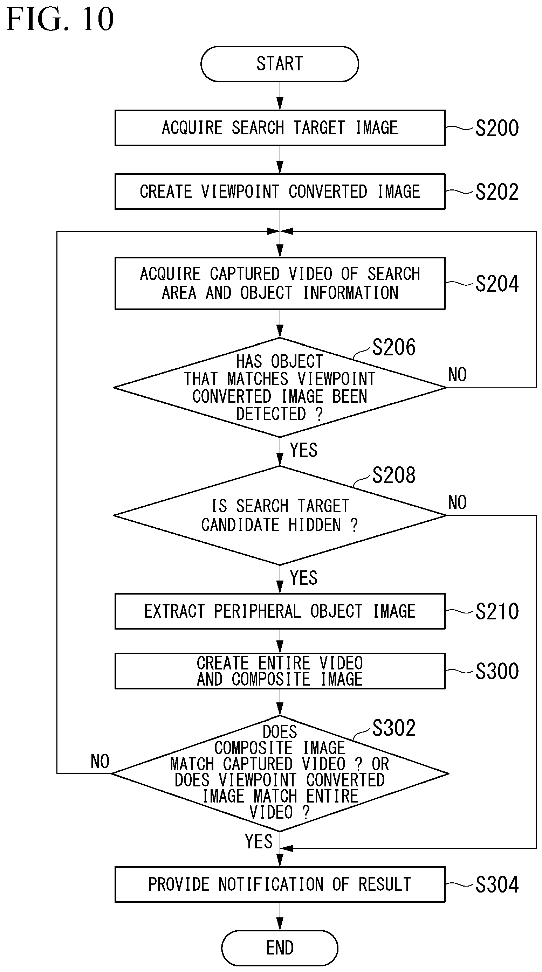

FIG. 10 is a flowchart showing an example of a processing procedure in the search assistance device 100C according to the third embodiment. The search assistance device 100C performs step S200 to step S206 as described above. In a case where the determination unit 114 has detected an object (search target candidate) that matches the viewpoint converted image P14 (step S206: YES), it determines whether or not the search target candidate is hidden by a peripheral object (step S208). In a case where the search target candidate is not hidden by a peripheral object (step S208: NO), the determination unit 114 provides a notification of the search result (step S216). In a case where the search target candidate is hidden by a peripheral object (step S208: YES), the video creation unit 130 cuts out and extracts an image including an image showing the peripheral object (peripheral object image) (step S210), creates a composite video P20 by combining the peripheral object image with the viewpoint converted image P14, and creates the entire video P16 using the peripheral object image (step S300).

Next, the search unit 132 determines whether or not the composite image P20 matches the captured image P10 and determines whether or not the viewpoint converted image P14 matches the entire video P16 (step S302). In a case where the composite image P20 does not match the captured image P10 and the viewpoint converted image P14 does not match the entire video P16 (step S302: NO), the search unit 132 returns the process to step S204. In a case where the composite image P20 matches the captured image P10 or the viewpoint converted image P14 matches the entire video P16 (step S302: YES), the search unit 122 provides a notification of the search result (step S304). In a case where the composite image P20 matches the captured video P10, the search unit 132 transmits an image showing the search target candidate, position information of the search target candidate, and the like, to the searcher's terminal device 300 as the search result. In a case where the viewpoint converted image P14 matches the entire video P16, the search unit 132 transmits an image showing the search target candidate that was the source of the entire video P16, position information of the search target candidate, and the like, to the searcher's terminal device 300 as the search result.

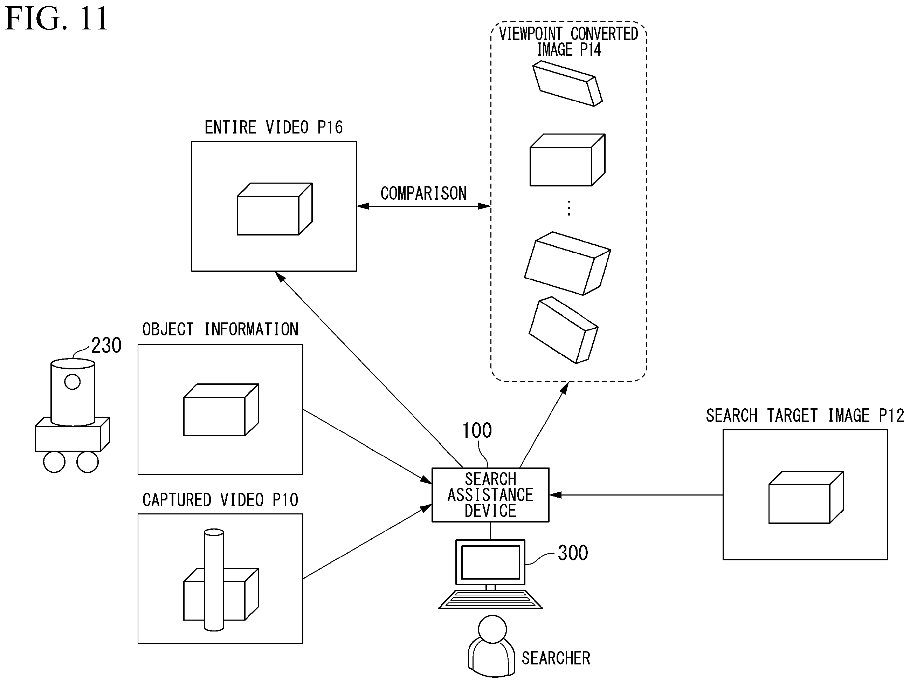

Modification examples of the first embodiment, the second embodiment, and the third embodiment will be described below. FIG. 11 is a diagram for describing a modification example of the search assistance system. The camera system 200 of the search assistance system in the modification example may include a mobile robot 230 having a camera device. The mobile robot 230 moves based on, for example, control information from the search assistance device 100 or the operation of the searcher's terminal device 300. The mobile robot 230 moves through the search area, acquires a captured video, and transmits the captured video to the search assistance device 100. The search assistance device 100 acquires the captured video received from the mobile robot 230 as object information. The search assistance device 100 uses the object information received from the mobile robot 230 to create an entire video P16 of the search target candidate included in the captured video received from the camera device 210. Accordingly, the search assistance device 100 can create the entire video P16 using a captured video captured in an imaging direction different from the imaging direction of the camera device 210, for example.

The mobile robot 230 may move based on the operation of the searcher and transmit the captured video P10 acquired while moving to the search assistance device 100. Accordingly, the mobile robot 230 can provide the captured video P10 to the search assistance device 100 instead of the camera device 210. As a result, the mobile robot 230 can assist in searching for the search target even in a location where a camera device such as the camera device 210 or the infrared camera device 212 is not installed.

The search assistance device 100 may acquire the captured video P10 by controlling the movement of the mobile robot 230 in order to create, for example, a 360-degree free viewpoint video. The search assistance device 100 detects a search target candidate using a fixed camera device 210, and in a case where it is desired to check the captured video P10 of the search target candidate in more detail, the search assistance device 100 transmits control information to the mobile robot 230 to move the mobile robot 230 to the location where the search target candidate has been found. In a case where the mobile robot 230 moves to the vicinity of a search target candidate, the search assistance device 100 can acquire a video for creating a free viewpoint video by controlling the zoom and the imaging direction of the mobile robot 230.

A fourth embodiment will be described below. A search assistance device 100D according to the fourth embodiment differs from the above-described embodiments in that a search target is searched for based on an object designated by a searcher in a captured video P10.

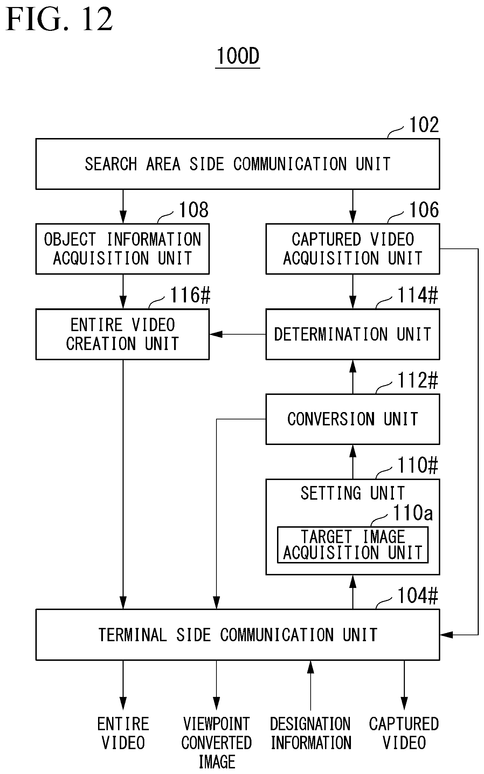

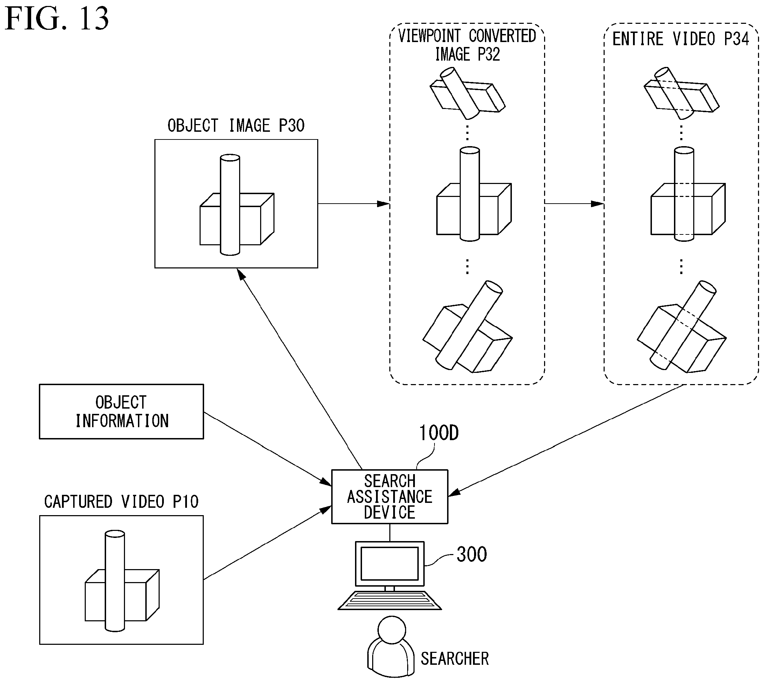

FIG. 12 is a block diagram showing an example of the search assistance device 100D according to the fourth embodiment. FIG. 13 is a diagram for describing a process performed by the search assistance device 100D according to the fourth embodiment. A setting unit 110# of the search assistance device 100D according to the fourth embodiment includes a target image acquisition unit 110a that acquires, as a search target image, an object image P30 designated based on the operation of the searcher from among the object images included in the captured video P10. The setting unit 110# sets the object image P30 acquired by the target image acquisition unit 110a as a search target image including the search target object.

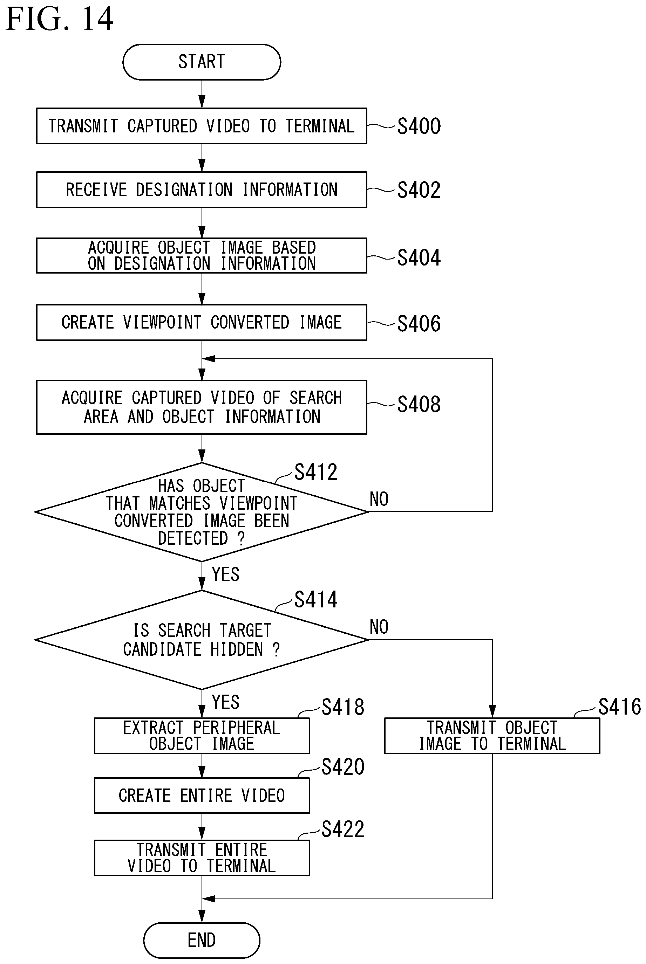

FIG. 14 is a flowchart showing an example of a processing procedure in the search assistance device 100D according to the fourth embodiment. The search assistance device 100D transmits the captured video P10 received from the camera system 200 by the search area side communication unit 102 to the searcher's terminal device 300 via a terminal side communication unit 104# (step S400). Accordingly, the searcher's terminal device 300 presents the captured video P10 to the searcher. The searcher's terminal device 300 transmits, to the search assistance device 100D, designation information indicating that an object included in the captured video P10 is designated by an operation of the searcher. The terminal side communication unit 104# of the search assistance device 100D receives the designation information (step S402). The target image acquisition unit 110a acquires the object image P30 designated by the searcher based on the designation information as a search target image (step S404).

A conversion unit 112# creates a viewpoint converted image P32 by performing viewpoint conversion on the object image P30 acquired by the target image acquisition unit 110a as the search target image (step S406). Next, the captured video acquisition unit 106 acquires the captured video P10, and the object information acquisition unit 108 acquires object information (step S408). Next, a determination unit 114# compares viewpoint converted images P32 with objects included in the captured video P10 to detect an object included in the captured video P10 that matches one of the viewpoint converted images P32 as a search target candidate. In a case where the determination unit 114# has detected a search target candidate by comparing the viewpoint converted image P32 with the captured video P10 (step S412: YES), it determines whether or not the search target candidate is hidden by a peripheral object (step S414). In a case where the determination unit 114# does not detect an object that matches the viewpoint converted image P32 (step S412: NO), it returns the process to step S408.

In a case where part of the search target candidate is hidden by a peripheral object (step S414: YES), an entire video creation unit 116# cuts out and extracts an image including a peripheral object image (step S418) and creates an entire video P34 in which the entire search target candidate can be checked from the viewpoint converted image P32 using the peripheral object image (step S420). The terminal side communication unit 104# transmits the entire video P34 to the searcher's terminal device 300 (step S422). In a case where part of the search target candidate is not hidden by a peripheral object (step S414: NO), the search assistance device 100D transmits the viewpoint converted image P32 that matches the object image P30 to the searcher's terminal device 300 via the terminal side communication unit 104# (step S316). Accordingly, the search assistance device 100D can search for a search target based on an object designated by the searcher in the captured video P10.

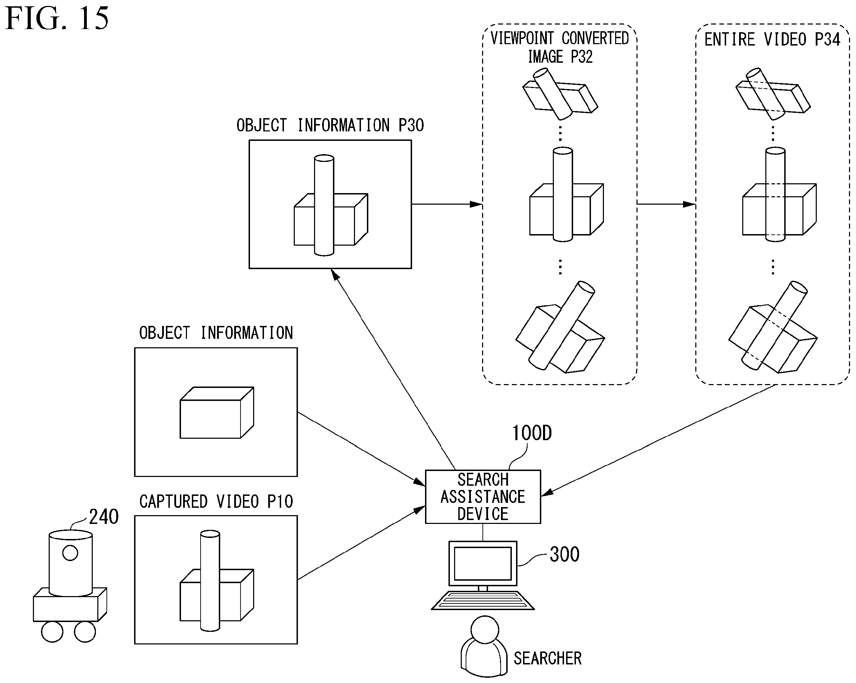

A modification example of the fourth embodiment will be described below. FIG. 15 is a diagram for describing a modification example of the fourth embodiment. The camera system 200 of the search assistance system in the modification example includes a mobile robot 240 having a camera device. The mobile robot 240 moves based on, for example, control information from the search assistance device 100D or the operation of the searcher's terminal device 300. The mobile robot 240 moves through a search area based on, for example, the operation of the searcher, acquires a captured video P10, and transmits the captured video P10 to the search assistance device 100D. The search assistance device 100D acquires the captured video P10 received from the mobile robot 240. Accordingly, the searcher can search for the search target by moving the mobile robot 240. As a result, the mobile robot 240 can assist in searching for the search target even in a location where a camera device such as the camera device 210 or the infrared camera device 212 is not installed.

The search assistance device 100D may acquire the captured video P10 from the camera device 210 and acquire a captured video acquired from the mobile robot 240 as object information. The search assistance device 100D uses the captured video received from the mobile robot 240 to create an entire video of the search target candidate included in the captured video P10 received from the camera device 210. Accordingly, the search assistance device 100D can create the entire video using a captured video captured in an imaging direction different from the imaging direction of the camera device 210, for example.

The search assistance device 100D may acquire the captured video by controlling the movement of the mobile robot 240 in order to create, for example, a 360-degree free viewpoint video. The search assistance device 100D detects a search target candidate using a fixed camera device 210, and in a case where it is desired to check the captured video of the search target candidate in more detail, the search assistance device 100D transmits control information to the mobile robot 240 to move the mobile robot 240 to the location where the search target candidate has been found. In a case where the mobile robot 240 moves to the vicinity of a search target candidate, the search assistance device 100D can acquire a video for creating a free viewpoint video by controlling the zoom and the imaging direction of the mobile robot 240.

Another modification example of the fourth embodiment will be described below. The searcher's terminal device 300 may have a goggle-type display device (not shown) that is worn on the searcher's head and may display the captured video P10 on the goggle-type display device. It is desirable that the captured video P10 to be displayed on the goggle-type display device is a 360-degree free viewpoint video so that the searcher can freely change the viewpoint. However, the present disclosure is not limited thereto, the captured video P10 may be a captured video P10 captured by controlling the imaging direction and the imaging range of the camera system 200 in accordance with the viewpoint of the searcher, may be the captured video P10 captured by controlling the movement of the mobile robot 240 in accordance with the viewpoint of the searcher, or may be a virtual reality video in which a video of the search range is virtually created.

The searcher's terminal device 300 includes a detection device that detects the searcher's gestures, detects finger movements as the searcher's gestures, generates designation information, and transmits the designation information to the search assistance device 100D. The terminal side communication unit 104# of the search assistance device 100D receives the designation information, and the target image acquisition unit 110a acquires the object image P30 designated by the searcher based on the designation information as a search target image. The conversion unit 112# creates a viewpoint converted image P32 by performing viewpoint conversion on the object image P30 designated by the searcher. The determination unit 114# has detected a search target candidate by comparing the viewpoint converted image P32 with the captured video P10 and determines whether or not the search target candidate is hidden by a peripheral object. In a case where the search target candidate is hidden by a peripheral object, the entire video creation unit 116# creates an entire video P34 from the viewpoint converted image P32 using object information of the search target object and object information of the peripheral objects. The entire video creation unit 116# transmits the entire video P34 to the searcher's terminal device 300 via the terminal side communication unit 104#. In a case where the search target candidate is not hidden by a peripheral object, the search assistance device 100D transmits the viewpoint converted image P32 that matches the object image P30 to the searcher's terminal device 300 via the terminal side communication unit 104#. Accordingly, the search assistance device 100D can search for the search target using the entire video P34 or the viewpoint converted image P32. In addition, the search assistance device 100D allows a searcher to wear a goggle-type display device, giving the searcher the feeling as if he or she were actually searching at the site.

Although the embodiments of the present disclosure have been described in detail with reference to the drawings, the specific configurations are not limited to the above-described embodiments and also include design and the like within the scope of the present disclosure. The configurations described in the above-described embodiments can be combined in any manner.

### REFERENCE SIGNS LIST

100, 100B, 100C, 100D Search assistance device
102 Search area side communication unit
104 Terminal side communication unit
106 Captured video acquisition unit
108 Object information acquisition unit
110 Setting unit
110a Target image acquisition unit
112 Conversion unit
114 Determination unit
116 Video creation unit
116# Entire video creation unit
118 Search unit
120 Combining unit
122 Search unit
130 Video creation unit
132 Search unit
200 Camera system
210 Camera device
212 Infrared camera device
214 Radar device
216 Object information generation device
220 Control unit
230, 240 Mobile robot
300 Searcher's terminal device

## Claims

1. A search assistance device (100) comprising:
a captured video acquisition unit (106) configured to acquire a captured video;
a setting unit (110) configured to acquire a search target image including a search target object from another device and set the search target image;
an object information acquisition unit (108) configured to acquire object information indicating an object included in the captured video;
a conversion unit (112) configured to convert the search target image set by the setting unit into converted images viewed from optional viewpoints;
a determination unit (114) configured to detect, as the search target candidate, an object included in the captured video that matches one converted image of the converted images by comparing the converted image converted by the conversion unit (112) from the search target candidate with the object included in the captured video and determine whether or not part of a search target candidate is hidden by a peripheral object using the search target image or the object information;
a video creation unit (116) configured to create a comparison video to be compared to search for the search target object using an image that shows the peripheral object in the captured video in a case where the determination unit determines that part of the search target candidate is hidden by the peripheral object; and
a search unit (118) configured to search for the search target object by comparing the comparison video created by the video creation unit with the converted image converted by the conversion unit (112).

2. A search assistance device (100B) comprising:
a captured video acquisition unit (106) configured to acquire a captured video;
a setting unit (110) configured to set a search target image including a search target object;
an object information acquisition unit (108) configured to acquire object information indicating an object included in the captured video;
a determination unit (114) configured to determine whether or not part of a search target candidate is hidden by a peripheral object using the search target image or the object information;
a video creation unit (116) configured to create a comparison video to be compared to search for the search target object using an image that shows the peripheral object in the captured video in a case where the determination unit (114) determines that part of the search target candidate is hidden by the peripheral object; and
a conversion unit (112) configured to convert the search target image set by the setting unit (110) into converted images viewed from optional viewpoints,
wherein the video creation unit (116) includes a combining unit (120) configured to create, as the comparison video, a composite image by combining the image showing the peripheral object that is hiding part of the search target candidate with the converted image, and
wherein the search assistance device (100B) further comprises a search unit (122) configured to search for the search target object by comparing the object included in the captured video with the composite image created by the combining unit (120).

3. A search assistance device (100D) comprising:
a captured video acquisition unit (106) configured to acquire a captured video;
a setting unit configured (110#) to set a search target image including a search target object;
an object information acquisition unit (108) configured to acquire object information indicating an object included in the captured video;
a determination unit (114#) configured to determine whether or not part of a search target candidate is hidden by a peripheral object using the search target image or the object information;
a video creation unit (116#) configured to create a comparison video to be compared to search for the search target object using an image that shows the peripheral object in the captured video in a case where the determination unit (114#) determines that part of the search target candidate is hidden by the peripheral object; and
a conversion unit (112#) configured to convert the search target image set by the setting unit (110#) into converted images viewed from optional viewpoints,
wherein the setting unit (110#) includes a target image acquisition unit (110a) configured to acquire, as the search target image, an object image designated based on an operation of a searcher from among object images included in the captured video,
wherein the conversion unit (112#) is configured to convert the object image acquired by the target image acquisition unit (110a) into a plurality of the converted images,
wherein the determination unit (114#) is configured to detect, as the search target candidate, an object included in the captured video that matches one converted image of the converted images by comparing the converted image converted by the conversion unit (112#) with the object included in the captured video and determine whether or not part of the detected search target candidate is hidden by a peripheral object,
wherein the video creation unit (116#) is configured to transmit the comparison video to a searcher's terminal device in a case where part of the search target candidate is hidden by the peripheral object, and
wherein the search assistance device further comprises a communication unit (104#) configured to transmit the converted image that matches the captured video to the searcher's terminal device in a case where part of the search target candidate is not hidden by the peripheral object.

4. A search assistance method comprising:
a step (S100) of acquiring a search target image including a search target object from another device and setting the search target image;a step (S104) of acquiring a captured video and object information indicating an object included in the captured video;
a step (S102) of converting the set search target image into converted images viewed from optional viewpoints;
a step (S106) of detecting, as a search target candidate, an object included in the captured video that matches one converted image of the converted images by comparing the converted image converted from the search target candidate with the object included in the captured video;
a step (S108) of determining whether or not part of the detected search target candidate is hidden by a peripheral object;
a step (S112) of creating a comparison video to be compared to search for the search target object using an image that shows the peripheral object in the captured video in a case where it is determined that part of the search target candidate is hidden by the peripheral object; and
a step (S114) of searching for the search target object by comparing the created comparison video with the converted image.

5. A search assistance method comprising:
a step (S200) of setting a search target image including a search target object;
a step (S204) of acquiring a captured video and object information indicating an object included in the captured video;
a step (S208) of determining whether or not part of a search target candidate is hidden by a peripheral object using the search target image or the object information;
a step (S212) of creating a comparison video to be compared to search for the search target object using an image that shows the peripheral object in the captured video in a case where it is determined that part of the search target candidate is hidden by the peripheral object;
a step (S202) of converting the set search target image into converted images viewed from optional viewpoints;
a step (S212) of creating, as the comparison video, a composite image by combining the image showing the peripheral object that is hiding part of the search target candidate with the converted image; and
a step (S214) of searching for the search target object by comparing the object included in the captured video with the created composite image.

6. A search assistance method comprising:
a step (S408) of acquiring a captured video and object information indicating an object included in the captured video;
a step (S404) of acquiring, as a search target image including a search target object, an object image designated based on an operation of a searcher from among object images included in the captured video,
a step (S408) of setting the search target image;
a step (S406) of converting the acquired object image into a plurality of the converted images viewed from optional viewpoints,
a step (S412) of detecting, as the search target candidate, an object included in the captured video that matches one converted image of the converted images by comparing the converted image with the object included in the captured video and
a step (S414) of determining whether or not part of the detected search target candidate is hidden by a peripheral object;
a step (S420) of creating a comparison video to be compared to search for the search target object using an image that shows the peripheral object in the captured video in a case where it is determined that part of the search target candidate is hidden by the peripheral object;
a step (S422) of transmitting the comparison video to a searcher's terminal device in a case where part of the search target candidate is hidden by the peripheral object; and
a step (S416) of transmitting the converted image that matches the captured video to the searcher's terminal device in a case where part of the search target candidate is not hidden by the peripheral object.

7. A program causing a computer mounted on a search assistance device to execute:
a step (S100) of acquiring a search target image including a search target object from another device and setting the search target image;
a step (S104) of acquiring a captured video and object information indicating an object included in the captured video;
a step (S102) of converting the set search target image into converted images viewed from optional viewpoints;
a step (S106) of detecting, as a search target candidate, an object included in the captured video that matches one converted image of the converted images by comparing the converted image converted from the search target candidate with the object included in the captured video;
a step (S108) of determining whether or not part of the detected search target candidate is hidden by a peripheral object;
a step (S112) of creating a comparison video to be compared to search for the search target object using an image that shows the peripheral object in the captured video in a case where it is determined that part of the search target candidate is hidden by the peripheral object; and
a step (S114) of searching for the search target object by comparing the created comparison video with the converted image.

8. A program causing a computer mounted on a search assistance device to execute:
a step (S200) of setting a search target image including a search target object;
a step (S204) of acquiring a captured video and object information indicating an object included in the captured video;
a step (S208) of determining whether or not part of a search target candidate is hidden by a peripheral object using the search target image or the object information;
a step (S212) of creating a comparison video to be compared to search for the search target object using an image that shows the peripheral object in the captured video in a case where it is determined that part of the search target candidate is hidden by the peripheral object;
a step (S202) of converting the set search target image into converted images viewed from optional viewpoints;
a step (S212) of creating, as the comparison video, a composite image by combining the image showing the peripheral object that is hiding part of the search target candidate with the converted image; and
a step (S214) of searching for the search target object by comparing the object included in the captured video with the created composite image.

9. A program causing a computer mounted on a search assistance device to execute:
a step (S408) of acquiring a captured video and object information indicating an object included in the captured video;
a step (S404) of acquiring, as a search target image including a search target object, an object image designated based on an operation of a searcher from among object images included in the captured video,
a step (S408) of setting the search target image;
a step (S406) of converting the acquired object image into a plurality of the converted images viewed from optional viewpoints,
a step (S412) of detecting, as the search target candidate, an object included in the captured video that matches one converted image of the converted images by comparing the converted image with the object included in the captured video and
a step (S414) of determining whether or not part of the detected search target candidate is hidden by a peripheral object;
a step (S420) of creating a comparison video to be compared to search for the search target object using an image that shows the peripheral object in the captured video in a case where it is determined that part of the search target candidate is hidden by the peripheral object;
a step (S422) of transmitting the comparison video to a searcher's terminal device in a case where part of the search target candidate is hidden by the peripheral object; and
a step (S416) of transmitting the converted image that matches the captured video to the searcher's terminal device in a case where part of the search target candidate is not hidden by the peripheral object.

10. A search assistance system comprising:
an imaging device (210) configured to generate a captured video;
an object information generation device (216) configured to generate object information indicating an object included in the captured video; and
a search assistance device (100) including
a setting unit configured to set a search target image including a search target object,
a determination unit configured to determine whether or not part of a search target candidate is hidden by a peripheral object using the search target image or the object information, and
a video creation unit configured to create a comparison video to be compared to search for the search target object using an image that shows the peripheral object in the captured video in a case where the determination unit determines that part of the search target candidate is hidden by the peripheral object.

11. A search assistance system comprising:
an imaging device (210) configured to generate a captured video;
an object information generation device (216) configured to generate object information indicating an object included in the captured video; and
a search assistance device (100B) including
a setting unit (110) configured to set a search target image including a search target object,
a determination unit (114) configured to determine whether or not part of a search target candidate is hidden by a peripheral object using the search target image or the object information,
a video creation unit (116) configured to create a comparison video to be compared to search for the search target object using an image that shows the peripheral object in the captured video in a case where the determination unit (114) determines that part of the search target candidate is hidden by the peripheral object,
a conversion unit (112) configured to convert the search target image set by the setting unit (110) into converted images viewed from optional viewpoints, and
a search unit (122),
wherein the video creation unit (116) includes a combining unit (120) configured to create, as the comparison video, a composite image by combining the image showing the peripheral object that is hiding part of the search target candidate with the converted image, and
wherein the search unit (122) is configured to search for the search target object by comparing the object included in the captured video with the composite image created by the combining unit (120).

12. A search assistance system comprising:
an imaging device (210) configured to generate a captured video;
an object information generation device (216) configured to generate object information indicating an object included in the captured video; and
a search assistance device (100D) including
a setting unit configured (110#) to set a search target image including a search target object;
a determination unit (114#) configured to determine whether or not part of a search target candidate is hidden by a peripheral object using the search target image or the object information;
a video creation unit (116#) configured to create a comparison video to be compared to search for the search target object using an image that shows the peripheral object in the captured video in a case where the determination unit (114#) determines that part of the search target candidate is hidden by the peripheral object;
a conversion unit (112#) configured to convert the search target image set by the setting unit (110#) into converted images viewed from optional viewpoints, and
a communication unit (104#),
wherein the setting unit (110#) includes a target image acquisition unit (110a) configured to acquire, as the search target image, an object image designated based on an operation of a searcher from among object images included in the captured video,
wherein the conversion unit (112#) is configured to convert the object image acquired by the target image acquisition unit (110a) into a plurality of the converted images,
wherein the determination unit (114#) is configured to detect, as the search target candidate, an object included in the captured video that matches one converted image of the converted images by comparing the converted image converted by the conversion unit (112#) with the object included in the captured video and determine whether or not part of the detected search target candidate is hidden by a peripheral object,
wherein the video creation unit (116#) is configured to transmit the comparison video to a searcher's terminal device in a case where part of the search target candidate is hidden by the peripheral object, and
wherein the communication unit (104#) is configured to transmit the converted image that matches the captured video to the searcher's terminal device in a case where part of the search target candidate is not hidden by the peripheral object.

## Patentansprüche

1. Suchassistenzeinrichtung (100), umfassend:
eine Aufgenommenes-Video-Erwerbungseinheit (106), die konfiguriert ist, ein aufgenommenes Video zu erwerben;
eine Festlegungseinheit (110), die konfiguriert ist, ein Suchzielbild, das ein Suchzielobjekt enthält, von einer anderen Vorrichtung zu erwerben, und das Suchzielbild festzulegen;
eine Objektinformations-Erwerbungseinheit (108), die konfiguriert ist, Objektinformationen zu erwerben, die ein in dem aufgenommenen Video enthaltenes Objekt angeben;
eine Konvertierungseinheit (112), die konfiguriert ist, das von der Festlegungseinheit festgelegte Suchzielbild in konvertierte Bilder zu konvertieren, die von optionalen Blickpunkten aus betrachtet werden;
eine Bestimmungseinheit (114), die konfiguriert ist, als den Suchzielkandidaten, ein in dem aufgenommenen Video enthaltenes Objekt zu erfassen, das mit einem konvertierten Bild der konvertierten Bilder übereinstimmt, durch Vergleichen des von der Konvertierungseinheit (112) aus dem Suchzielkandidaten konvertierten Bildes mit dem in dem aufgenommenen Video enthaltenen Objekt, und unter Verwendung des Suchzielbildes oder der Objektinformationen zu bestimmen, ob ein Teil eines Suchzielkandidaten durch ein peripheres Objekt verdeckt ist oder nicht;
eine Videoerstellungseinheit (116), die konfiguriert ist, ein Vergleichsvideo, das zu vergleichen ist, zu erstellen, um nach dem Suchzielobjekt unter Verwendung eines Bildes zu suchen, welches das periphere Objekt in dem aufgenommenen Video in einem Fall zeigt, in dem die Bestimmungseinheit bestimmt, dass ein Teil des Suchzielkandidaten durch das periphere Objekt verdeckt ist; und
eine Sucheinheit (118), die konfiguriert ist, nach dem Suchzielobjekt zu suchen, durch Vergleichen des von der Videoerstellungseinheit erstellten Vergleichsvideos mit dem von der Konvertierungseinheit (112) konvertierten Bild.

2. Suchassistenzeinrichtung (100B), umfassend:
eine Aufgenommenes-Video-Erwerbungseinheit (106), die konfiguriert ist, ein aufgenommenes Video zu erwerben;
eine Festlegungseinheit (110), die konfiguriert ist, ein Suchzielbild, das ein Suchzielobjekt enthält, festzulegen;
eine Objektinformations-Erwerbungseinheit (108), die konfiguriert ist, Objektinformationen zu erwerben, die ein in dem aufgenommenen Video enthaltenes Objekt angeben;
eine Bestimmungseinheit (114), die konfiguriert ist, zu bestimmen, ob ein Teil eines Suchzielkandidaten durch ein peripheres Objekt verdeckt ist oder nicht, unter Verwendung des Suchzielbildes oder der Objektinformationen;
eine Videoerstellungseinheit (116), die konfiguriert ist, ein zu vergleichendes Vergleichsvideo zu erstellen, um nach dem Suchzielobjekt unter Verwendung eines Bildes zu suchen, welches das periphere Objekt in dem aufgenommenen Video in einem Fall zeigt, in dem die Bestimmungseinheit (114) bestimmt, dass ein Teil des Suchzielkandidaten durch das periphere Objekt verdeckt ist; und
eine Konvertierungseinheit (112), die konfiguriert ist, das von der Festlegungseinheit (110) festgelegte Suchzielbild in konvertierte Bilder zu konvertieren, die von optionalen Blickpunkten aus betrachtet werden,
wobei die Videoerstellungseinheit (116) eine Kombinationseinheit (120) enthält, die konfiguriert ist, als das Vergleichsvideo ein zusammengesetztes Bild zu erstellen, durch Kombinieren des Bildes, welches das periphere Objekt zeigt, das einen Teil des Suchzielkandidaten verdeckt, mit dem konvertierten Bild, und
wobei die Suchassistenzeinrichtung (100B) ferner eine Sucheinheit (122) umfasst, die konfiguriert ist, nach dem Suchzielobjekt zu suchen, durch Vergleichen des in dem aufgenommenen Video enthaltenen Objekts mit dem von der Kombinationseinheit (120) erstellten zusammengesetzten Bild.

3. Suchassistenzeinrichtung (100D), umfassend:
eine Aufgenommenes-Video-Erwerbungseinheit (106), die konfiguriert ist, ein aufgenommenes Video zu erwerben;
eine Festlegungseinheit (110#), die konfiguriert ist, ein Suchzielbild, das ein Suchzielobjekt enthält, festzulegen;
eine Objektinformations-Erwerbungseinheit (108), die konfiguriert ist, Objektinformationen zu erwerben, die ein in dem aufgenommenen Video enthaltenes Objekt angeben;
eine Bestimmungseinheit (114#), die konfiguriert ist, zu bestimmen, ob ein Teil eines Suchzielkandidaten durch ein peripheres Objekt verdeckt ist oder nicht, unter Verwendung des Suchzielbildes oder der Objektinformationen;
eine Videoerstellungseinheit (116#), die konfiguriert ist, ein Vergleichsvideo, das zu vergleichen ist, zu erstellen, um nach dem Suchzielobjekt unter Verwendung eines Bildes zu suchen, welches das periphere Objekt in dem aufgenommenen Video in einem Fall zeigt, in dem die Bestimmungseinheit (114#) bestimmt, dass ein Teil des Suchzielkandidaten durch das periphere Objekt verdeckt ist; und
eine Konvertierungseinheit (112#), die konfiguriert ist, das von der Festlegungseinheit (110#) festgelegte Suchzielbild in konvertierte Bilder zu konvertieren, die von optionalen Blickpunkten aus betrachtet werden,
wobei die Festlegungseinheit (110#) eine Zielbild-Erwerbungseinheit (110a) enthält, die konfiguriert ist, als das Suchzielbild ein Objektbild zu erwerben, das auf der Grundlage einer Operation eines Suchenden aus den in dem aufgenommenen Video enthaltenen Objektbildern designiert wird,
wobei die Konvertierungseinheit (112#) konfiguriert ist, das von der Zielbild-Erwerbungseinheit (110a) erworbene Objektbild in eine Vielzahl der konvertierten Bilder zu konvertieren,
wobei die Bestimmungseinheit (114#) konfiguriert ist, als den Suchzielkandidaten, ein in dem aufgenommenen Video enthaltenes Objekt zu erfassen, das mit einem konvertierten Bild der konvertierten Bilder übereinstimmt, durch Vergleichen des von der Konvertierungseinheit (112#) konvertierten Bildes mit dem in dem aufgenommenen Video enthaltenen Objekt, und zu bestimmen, ob ein Teil des erfassten Suchzielkandidaten durch ein peripheres Objekt verdeckt ist oder nicht,
wobei die Videoerstellungseinheit (116#) konfiguriert ist, das Vergleichsvideo an ein Endgerät eines Suchenden zu übermitteln, in einem Fall, in dem ein Teil des Suchzielkandidaten durch das periphere Objekt verdeckt ist, und
wobei die Suchassistenzeinrichtung ferner eine Kommunikationseinheit (104#) umfasst, die konfiguriert ist, das konvertierte Bild, das mit dem aufgenommenen Video übereinstimmt, an das Endgerät des Suchenden in einem Fall zu übermitteln, in dem ein Teil des Suchzielkandidaten nicht durch das periphere Objekt verdeckt ist.

4. Suchassistenzverfahren, umfassend:
einen Schritt (S100) des Erwerbens eines Suchzielbildes, das ein Suchzielobjekt von einer anderen Einrichtung enthält, und des Festlegens des Suchzielbildes; einen Schritt (S104) des Erwerbens eines aufgenommenen Videos und von Objektinformationen, die ein in dem aufgenommenen Video enthaltenes Objekt angeben;
einen Schritt (S102) des Konvertierens des festgelegten Suchzielbildes in konvertierte Bilder, die von optionalen Blickpunkten aus betrachtet werden;
einen Schritt (S106) des Erfassens, als einen Suchzielkandidaten, eines in dem aufgenommenen Video enthaltenen Objekts, das mit einem konvertierten Bild der konvertierten Bilder übereinstimmt, durch Vergleichen des aus dem Suchzielkandidaten konvertierten Bildes mit dem in dem aufgenommenen Video enthaltenen Objekt;
einen Schritt (S108) des Bestimmens, ob ein Teil des erfassten Suchzielkandidaten durch ein peripheres Objekt verdeckt ist oder nicht;
einen Schritt (S112) des Erstellens eines Vergleichsvideos, das zu vergleichen ist, um nach dem Suchzielobjekt zu suchen, unter Verwendung eines Bildes, welches das periphere Objekt in dem aufgenommenen Video zeigt, in einem Fall, in dem bestimmt wird, dass ein Teil des Suchzielkandidaten durch das periphere Objekt verdeckt ist; und
einen Schritt (S114) des Suchens nach dem Suchzielobjekt durch Vergleichen des erstellten Vergleichsvideos mit dem konvertierten Bild.

5. Suchassistenzverfahren, umfassend:
einen Schritt (S200) des Festlegens eines Suchzielbildes, das ein Suchzielobjekt enthält;
einen Schritt (S204) des Erwerbens eines aufgenommenen Videos und von Objektinformationen, die ein in dem aufgenommenen Video enthaltenes Objekt angeben;
einen Schritt (S208) des Bestimmens, ob ein Teil eines Suchzielkandidaten durch ein peripheres Objekt verdeckt ist oder nicht, unter Verwendung des Suchzielbildes oder der Objektinformationen;
einen Schritt (S212) des Erstellens eines Vergleichsvideos, das zu vergleichen ist, um nach dem Suchzielobjekt zu suchen, unter Verwendung eines Bildes, welches das periphere Objekt in dem aufgenommenen Video zeigt, in einem Fall, in dem bestimmt wird, dass ein Teil des Suchzielkandidaten durch das periphere Objekt verdeckt ist;
einen Schritt (S202) des Konvertierens des festgelegten Suchzielbildes in konvertierte Bilder, die von optionalen Blickpunkten aus betrachtet werden;
einen Schritt (S212) des Erstellens, als das Vergleichsvideo, eines zusammengesetzten Bildes durch Kombinieren des Bildes, welches das periphere Objekt zeigt, das einen Teil des Suchzielkandidaten verdeckt, mit dem konvertierten Bild; und
einen Schritt (S214) des Suchens nach dem Suchzielobjekt durch Vergleichen des in dem aufgenommenen Video enthaltenen Objekts mit dem erstellten zusammengesetzten Bild.

6. Suchassistenzverfahren, umfassend:
einen Schritt (S408) des Erwerbens eines aufgenommenen Videos und von Objektinformationen, die ein in dem aufgenommenen Video enthaltenes Objekt angeben;
einen Schritt (S404) des Erwerbens, als ein Suchzielbild, das ein Suchzielobjekt enthält, eines Objektbildes, das auf der Grundlage einer Operation eines Suchenden aus den Objektbildern designiert wird, die in dem aufgenommenen Video enthalten sind,
einen Schritt (S408) des Festlegens des Suchzielbildes;
einen Schritt (S406) des Konvertierens des erworbenen Objektbildes in eine Vielzahl der konvertierten Bilder, die von optionalen Blickpunkten aus betrachtet werden,
einen Schritt (S412) des Erfassens, als den Suchzielkandidaten, eines Objekts, das in dem aufgenommenen Video enthalten ist, das mit einem konvertierten Bild der konvertierten Bilder übereinstimmt, durch Vergleichen des konvertierten Bildes mit dem Objekt, das in dem aufgenommenen Video enthalten ist, und
einen Schritt (S414) des Bestimmens, ob ein Teil des erfassten Suchzielkandidaten durch ein peripheres Objekt verdeckt ist oder nicht;
einen Schritt (S420) des Erstellens eines Vergleichsvideos, das zu vergleichen ist, um nach dem Suchzielobjekt zu suchen, unter Verwendung eines Bildes, welches das periphere Objekt in dem aufgenommenen Video zeigt, in einem Fall, in dem bestimmt wird, dass ein Teil des Suchzielkandidaten durch das periphere Objekt verdeckt ist;
einen Schritt (S422) des Übermittelns des Vergleichsvideos an ein Endgerät eines Suchenden in einem Fall, in dem ein Teil des Suchzielkandidaten durch das periphere Objekt verdeckt ist; und
einen Schritt (S416) des Übermittelns des konvertierten Bildes, das mit dem aufgenommenen Video übereinstimmt, an das Endgerät des Suchenden in einem Fall, in dem ein Teil des Suchzielkandidaten nicht durch das periphere Objekt verdeckt ist.

7. Programm, das einen an einer Suchassistenzeinrichtung vorgesehenen Computer dazu veranlasst, auszuführen:
einen Schritt (S100) des Erwerbens eines Suchzielbildes, das ein Suchzielobjekt von einer anderen Einrichtung enthält, und des Festlegens des Suchzielbildes;
einen Schritt (S104) des Erwerbens eines aufgenommenen Videos und von Objektinformationen, die ein in dem aufgenommenen Video enthaltenes Objekt angeben;
einen Schritt (S102) des Konvertierens des festgelegten Suchzielbildes in konvertierte Bilder, die von optionalen Blickpunkten aus betrachtet werden;
einen Schritt (S106) des Erfassens, als einen Suchzielkandidaten, eines in dem aufgenommenen Video enthaltenen Objekts, das mit einem konvertierten Bild der konvertierten Bilder übereinstimmt, durch Vergleichen des aus dem Suchzielkandidaten konvertierten Bildes mit dem in dem aufgenommenen Video enthaltenen Objekt;
einen Schritt (S108) des Bestimmens, ob ein Teil des erfassten Suchzielkandidaten durch ein peripheres Objekt verdeckt ist oder nicht;
einen Schritt (S112) des Erstellens eines Vergleichsvideos, das zu vergleichen ist, um nach dem Suchzielobjekt zu suchen, unter Verwendung eines Bildes, welches das periphere Objekt in dem aufgenommenen Video zeigt, in einem Fall, in dem bestimmt wird, dass ein Teil des Suchzielkandidaten durch das periphere Objekt verdeckt ist; und
einen Schritt (S114) des Suchens nach dem Suchzielobjekt durch Vergleichen des erstellten Vergleichsvideos mit dem konvertierten Bild.

8. Programm, das einen an einer Suchassistenzeinrichtung vorgesehenen Computer dazu veranlasst, auszuführen:
einen Schritt (S200) des Festlegens eines Suchzielbildes, das ein Suchzielobjekt enthält;
einen Schritt (S204) des Erwerbens eines aufgenommenen Videos und von Objektinformationen, die ein in dem aufgenommenen Video enthaltenes Objekt angeben;
einen Schritt (S208) des Bestimmens, ob ein Teil eines Suchzielkandidaten durch ein peripheres Objekt verdeckt ist oder nicht, unter Verwendung des Suchzielbildes oder der Objektinformationen;
einen Schritt (S212) des Erstellens eines Vergleichsvideos, das zu vergleichen ist, um nach dem Suchzielobjekt zu suchen, unter Verwendung eines Bildes, welches das periphere Objekt in dem aufgenommenen Video zeigt, in einem Fall, in dem bestimmt wird, dass ein Teil des Suchzielkandidaten durch das periphere Objekt verdeckt ist;
einen Schritt (S202) des Konvertierens des festgelegten Suchzielbildes in konvertierte Bilder, die von optionalen Blickpunkten aus betrachtet werden;
einen Schritt (S212) des Erstellens, als das Vergleichsvideo, eines zusammengesetzten Bildes durch Kombinieren des Bildes, welches das periphere Objekt zeigt, das einen Teil des Suchzielkandidaten verdeckt, mit dem konvertierten Bild; und
einen Schritt (S214) des Suchens nach dem Suchzielobjekt durch Vergleichen des in dem aufgenommenen Video enthaltenen Objekts mit dem erstellten zusammengesetzten Bild.

9. Programm, das einen an einer Suchassistenzeinrichtung vorgesehenen Computer dazu veranlasst, auszuführen:
einen Schritt (S408) des Erwerbens eines aufgenommenen Videos und von Objektinformationen, die ein in dem aufgenommenen Video enthaltenes Objekt angeben;
einen Schritt (S404) des Erwerbens, als ein Suchzielbild, das ein Suchzielobjekt enthält, eines Objektbildes, das auf der Grundlage einer Operation eines Suchenden aus den Objektbildern designiert wird, die in dem aufgenommenen Video enthalten sind,
einen Schritt (S408) des Festlegens des Suchzielbildes;
einen Schritt (S406) des Konvertierens des erworbenen Objektbildes in eine Vielzahl der konvertierten Bilder, die von optionalen Blickpunkten aus betrachtet werden,
einen Schritt (S412) des Erfassens, als den Suchzielkandidaten, eines Objekts, das in dem aufgenommenen Video enthalten ist, das mit einem konvertierten Bild der konvertierten Bilder übereinstimmt, durch Vergleichen des konvertierten Bildes mit dem Objekt, das in dem aufgenommenen Video enthalten ist, und
einen Schritt (S414) des Bestimmens, ob ein Teil des erfassten Suchzielkandidaten durch ein peripheres Objekt verdeckt ist oder nicht;
einen Schritt (S420) des Erstellens eines Vergleichsvideos, das zu vergleichen ist, um nach dem Suchzielobjekt zu suchen, unter Verwendung eines Bildes, welches das periphere Objekt in dem aufgenommenen Video zeigt, in einem Fall, in dem bestimmt wird, dass ein Teil des Suchzielkandidaten durch das periphere Objekt verdeckt ist;
einen Schritt (S422) des Übermittelns des Vergleichsvideos an ein Endgerät eines Suchenden in einem Fall, in dem ein Teil des Suchzielkandidaten durch das periphere Objekt verdeckt ist; und
einen Schritt (S416) des Übermittelns des konvertierten Bildes, das mit dem aufgenommenen Video übereinstimmt, an das Endgerät des Suchenden in einem Fall, in dem ein Teil des Suchzielkandidaten nicht durch das periphere Objekt verdeckt ist.

10. Suchassistenzsystem, umfassend:
eine Bildgebungseinrichtung (210), die konfiguriert ist, ein aufgenommenes Video zu erzeugen;
eine Objektinformations-Erzeugungseinheit (216), die konfiguriert ist, Objektinformationen zu erzeugen, die ein in dem aufgenommenen Video enthaltenes Objekt anzeigen; und
eine Suchassistenzeinrichtung (100), umfassend:
eine Festlegungseinheit, die konfiguriert ist, ein Suchzielbild, das ein Suchzielobjekt enthält, festzulegen,
eine Bestimmungseinheit, die konfiguriert ist, zu bestimmen, ob ein Teil eines Suchzielkandidaten durch ein peripheres Objekt verdeckt ist oder nicht, unter Verwendung des Suchzielbildes oder der Objektinformationen; und
eine Videoerstellungseinheit, die konfiguriert ist, ein Vergleichsvideo zu erstellen, das zu vergleichen ist, um nach dem Suchzielobjekt unter Verwendung eines Bildes zu suchen, welches das periphere Objekt in dem aufgenommenen Video in einem Fall zeigt, in dem die Bestimmungseinheit bestimmt, dass ein Teil des Suchzielkandidaten durch das periphere Objekt verdeckt ist.

11. Suchassistenzsystem, umfassend:
eine Bildgebungseinrichtung (210), die konfiguriert ist, ein aufgenommenes Video zu erzeugen;
eine Objektinformations-Erzeugungseinheit (216), die konfiguriert ist, Objektinformationen zu erzeugen, die ein in dem aufgenommenen Video enthaltenes Objekt anzeigen; und
ein Suchassistenzeinrichtung (100B), umfassend:
eine Festlegungseinheit (110), die konfiguriert ist, ein Suchzielbild, das ein Suchzielobjekt enthält, festzulegen,
eine Bestimmungseinheit (114), die konfiguriert ist, zu bestimmen, ob ein Teil eines Suchzielkandidaten durch ein peripheres Objekt verdeckt ist oder nicht, unter Verwendung des Suchzielbildes oder der Objektinformationen,
eine Videoerstellungseinheit (116), die konfiguriert ist, ein zu vergleichendes Vergleichsvideo zu erstellen, um nach dem Suchzielobjekt unter Verwendung eines Bildes zu suchen, welches das periphere Objekt in dem aufgenommenen Video in einem Fall zeigt, in dem die Bestimmungseinheit (114) bestimmt, dass ein Teil des Suchzielkandidaten durch das periphere Objekt verdeckt ist,
eine Konvertierungseinheit (112), die konfiguriert ist, das von der Festlegungseinheit (110) festgelegte Suchzielbild in konvertierte Bilder zu konvertieren, die von optionalen Blickpunkten aus betrachtet werden, und
eine Sucheinheit (122),
wobei die Videoerstellungseinheit (116) eine Kombinationseinheit (120) enthält, die konfiguriert ist, als das Vergleichsvideo ein zusammengesetztes Bild zu erstellen, durch Kombinieren des Bildes, welches das periphere Objekt zeigt, das einen Teil des Suchzielkandidaten verdeckt, mit dem konvertierten Bild, und
wobei die Sucheinheit (122) konfiguriert ist, nach dem Suchzielobjekt zu suchen, durch Vergleichen des in dem aufgenommenen Video enthaltenen Objekts mit dem durch die Kombinationseinheit (120) erstellten zusammengesetzten Bild.

12. Suchassistenzsystem, umfassend:
eine Bildgebungseinrichtung (210), die konfiguriert ist, ein aufgenommenes Video zu erzeugen;
eine Objektinformations-Erzeugungseinheit (216), die konfiguriert ist, Objektinformationen zu erzeugen, die ein in dem aufgenommenen Video enthaltenes Objekt anzeigen; und
eine Suchassistenzeinrichtung (100D), umfassend:
eine Festlegungseinheit (110#), die konfiguriert ist, ein Suchzielbild, das ein Suchzielobjekt enthält, festzulegen;
eine Bestimmungseinheit (114#), die konfiguriert ist, zu bestimmen, ob ein Teil eines Suchzielkandidaten durch ein peripheres Objekt verdeckt ist oder nicht, unter Verwendung des Suchzielbildes oder der Objektinformationen;
eine Videoerstellungseinheit (116#), die konfiguriert ist, ein Vergleichsvideo, das zu vergleichen ist, zu erstellen, um nach dem Suchzielobjekt unter Verwendung eines Bildes zu suchen, welches das periphere Objekt in dem aufgenommenen Video in einem Fall zeigt, in dem die Bestimmungseinheit (114#) bestimmt, dass ein Teil des Suchzielkandidaten durch das periphere Objekt verdeckt ist;
eine Konvertierungseinheit (112#), die konfiguriert ist, das von der Festlegungseinheit (110#) festgelegte Suchzielbild in konvertierte Bilder zu konvertieren, die von optionalen Blickpunkten aus betrachtet werden, und
eine Kommunikationseinheit (104#),
wobei die Festlegungseinheit (110#) eine Zielbild-Erwerbungseinheit (110a) enthält, die konfiguriert ist, als das Suchzielbild ein Objektbild zu erwerben, das auf der Grundlage einer Operation eines Suchenden aus den in dem aufgenommenen Video enthaltenen Objektbildern designiert wird,
wobei die Konvertierungseinheit (112#) konfiguriert ist, das von der Zielbild-Erwerbungseinheit (110a) erworbene Objektbild in eine Vielzahl der konvertierten Bilder zu konvertieren,
wobei die Bestimmungseinheit (114#) konfiguriert ist, als den Suchzielkandidaten, ein in dem aufgenommenen Video enthaltenes Objekt zu erfassen, das mit einem konvertierten Bild der konvertierten Bilder übereinstimmt, durch Vergleichen des von der Konvertierungseinheit (112#) konvertierten Bildes mit dem in dem aufgenommenen Video enthaltenen Objekt, und zu bestimmen, ob ein Teil des erfassten Suchzielkandidaten durch ein peripheres Objekt verdeckt ist oder nicht,
wobei die Videoerstellungseinheit (116#) konfiguriert ist, das Vergleichsvideo an ein Endgerät eines Suchenden zu übermitteln, in einem Fall, in dem ein Teil des Suchzielkandidaten durch das periphere Objekt verdeckt ist, und
wobei die Kommunikationseinheit (104#) konfiguriert ist, das konvertierte Bild, das mit dem aufgenommenen Video übereinstimmt, an das Endgerät des Suchenden in einem Fall zu übermitteln, in dem ein Teil des Suchzielkandidaten nicht durch das periphere Objekt verdeckt ist.

## Revendications

1. Dispositif d'aide à la recherche (100) comprenant :
une unité d'acquisition de vidéo capturée (106) configurée pour acquérir une vidéo capturée ;
une unité de définition (110) configurée pour acquérir une image cible de recherche comprenant un objet cible de recherche à partir d'un autre dispositif et définir l'image cible de recherche ;
une unité d'acquisition d'informations d'objet (108) configurée pour acquérir des informations relatives à un objet indiquant un objet présent dans la vidéo capturée ;
une unité de conversion (112) configurée pour convertir l'image cible de recherche définie par l'unité de définition en images converties vues depuis des points de vue facultatifs ;
une unité de détermination (114) configurée pour détecter, en tant que candidat cible de recherche, un objet inclus dans la vidéo capturée qui correspond à une image convertie des images converties en comparant l'image convertie par l'unité de conversion (112) provenant du candidat cible de recherche à l'objet inclus dans la vidéo capturée et déterminer si une partie du candidat cible de recherche est ou non cachée par un objet périphérique à l'aide de l'image cible de recherche ou des informations d'objet ;
une unité de création vidéo (116) configurée pour créer une vidéo de comparaison à comparer afin de rechercher l'objet cible de recherche à l'aide d'une image montrant l'objet périphérique dans la vidéo capturée dans un cas où l'unité de détermination détermine qu'une partie du candidat cible de recherche est cachée par l'objet périphérique ; et
une unité de recherche (118) configurée pour rechercher l'objet cible de recherche en comparant la vidéo de comparaison créée par l'unité de création vidéo à l'image convertie par l'unité de conversion (112).

2. Dispositif d'aide à la recherche (100B) comprenant :
une unité d'acquisition de vidéo capturée (106) configurée pour acquérir une vidéo capturée ;
une unité de définition (110) configurée pour définir une image cible de recherche comprenant un objet cible de recherche ;
une unité d'acquisition d'informations d'objet (108) configurée pour acquérir des informations relatives à un objet indiquant un objet présent dans la vidéo capturée ;
une unité de détermination (114) configurée pour déterminer si une partie d'un candidat cible de recherche est ou non cachée par un objet périphérique à l'aide de l'image cible de recherche ou des informations d'objet ;
une unité de création vidéo (116) configurée pour créer une vidéo de comparaison à comparer afin de rechercher l'objet cible de recherche à l'aide d'une image montrant l'objet périphérique dans la vidéo capturée dans un cas où l'unité de détermination (114) détermine qu'une partie du candidat cible de recherche est cachée par l'objet périphérique ; et
une unité de conversion (112) configurée pour convertir l'image cible de recherche définie par l'unité de définition (110) en images converties vues depuis des points de vue facultatifs,
dans lequel l'unité de création vidéo (116) comprend une unité de combinaison (120) configurée pour créer, en tant que vidéo de comparaison, une image composite en combinant l'image montrant l'objet périphérique qui cache une partie du candidat cible de recherche et l'image convertie, et
dans lequel le dispositif d'aide à la recherche (100B) comprend en outre une unité de recherche (122) configurée pour rechercher l'objet cible de recherche en comparant l'objet inclus dans la vidéo capturée à l'image composite créée par l'unité de combinaison (120).

3. Dispositif d'aide à la recherche (100D) comprenant :
une unité d'acquisition de vidéo capturée (106) configurée pour acquérir une vidéo capturée ;
une unité de définition (110#) configurée pour définir une image cible de recherche comprenant un objet cible de recherche ;
une unité d'acquisition d'informations d'objet (108) configurée pour acquérir des informations relatives à un objet indiquant un objet présent dans la vidéo capturée ;
une unité de détermination (114#) configurée pour déterminer si une partie d'un candidat cible de recherche est ou non cachée par un objet périphérique à l'aide de l'image cible de recherche ou des informations d'objet ;
une unité de création vidéo (116#) configurée pour créer une vidéo de comparaison à comparer afin de rechercher l'objet cible de recherche à l'aide d'une image montrant l'objet périphérique dans la vidéo capturée dans un cas où l'unité de détermination (114#) détermine qu'une partie du candidat cible de recherche est cachée par l'objet périphérique ; et
une unité de conversion (112#) configurée pour convertir l'image cible de recherche définie par l'unité de définition (110#) en images converties vues depuis des points de vue facultatifs,
dans lequel l'unité de définition (110#) comprend une unité d'acquisition d'image cible (110a) configurée pour acquérir, en tant qu'image cible de recherche, une image d'objet désignée en fonction d'une opération d'un chercheur parmi des images d'objet incluses dans la vidéo capturée,
dans lequel l'unité de conversion (112#) est configurée pour convertir l'image d'objet acquise par l'unité d'acquisition d'image cible (110a) en une pluralité des images converties,
dans lequel l'unité de détermination (114#) est configurée pour détecter, en tant que candidat cible de recherche, un objet inclus dans la vidéo capturée qui correspond à une image convertie des images converties en comparant l'image convertie par l'unité de conversion (112#) à l'objet inclus dans la vidéo capturée et déterminer si une partie du candidat cible de recherche détecté est ou non cachée par un objet périphérique,
dans lequel l'unité de création vidéo (116#) est configurée pour transmettre la vidéo de comparaison au dispositif terminal d'un chercheur dans un cas où une partie du candidat cible de recherche est cachée par l'objet périphérique, et
dans lequel le dispositif d'aide à la recherche comprend en outre une unité de communication (104#) configurée pour transmettre l'image convertie qui correspond à la vidéo capturée au dispositif terminal du chercheur dans un cas où une partie du candidat cible de recherche n'est pas cachée par l'objet périphérique.

4. Procédé d'aide à la recherche comprenant :
une étape (S100) d'acquisition d'une image cible de recherche comprenant un objet cible de recherche à partir d'un autre dispositif et de définition de l'image cible de recherche ; une étape (S104) d'acquisition d'une vidéo capturée et d'informations relatives à un objet indiquant un objet inclus dans la vidéo capturée ;
une étape (S102) de conversion de l'image cible de recherche définie en images converties vues depuis des points de vue facultatifs ;
une étape (S106) de détection, en tant que candidat cible de recherche, d'un objet inclus dans la vidéo capturée qui correspond à une image convertie des images converties en comparant l'image convertie à partir du candidat cible de recherche à l'objet inclus dans la vidéo capturée ;
une étape (S108) de détermination si une partie du candidat cible de recherche détecté est cachée par un objet périphérique ;
une étape (S112) de création d'une vidéo de comparaison à comparer afin de rechercher l'objet cible de recherche à l'aide d'une image montrant l'objet périphérique dans la vidéo capturée dans un cas où il est déterminé qu'une partie du candidat cible de recherche est cachée par l'objet périphérique ; et
une étape (S114) de recherche de l'objet cible de recherche en comparant la vidéo de comparaison créée à l'image convertie.

5. Procédé d'aide à la recherche comprenant :
une étape (S200) de définition d'une image cible de recherche comprenant un objet cible de recherche ;
une étape (S204) d'acquisition d'une vidéo capturée et d'informations relatives à un objet indiquant un objet inclus dans la vidéo capturée ;
une étape (S208) de détermination si une partie d'un candidat cible de recherche est ou non cachée par un objet périphérique à l'aide de l'image cible de recherche ou des informations d'objet ;
une étape (S212) de création d'une vidéo de comparaison à comparer afin de rechercher l'objet cible de recherche à l'aide d'une image montrant l'objet périphérique dans la vidéo capturée dans un cas où il est déterminé qu'une partie du candidat cible de recherche est cachée par l'objet périphérique ;
une étape (S202) de conversion de l'image cible de recherche définie en images converties vues depuis des points de vue facultatifs ;
une étape (S212) de création, en tant que vidéo de comparaison, d'une image composite en combinant l'image montrant l'objet périphérique qui cache une partie du candidat cible de recherche et l'image convertie ; et
une étape (S214) de recherche de l'objet cible de recherche en comparant l'objet inclus dans la vidéo capturée à l'image composite créée.

6. Procédé d'aide à la recherche comprenant :
une étape (S408) d'acquisition d'une vidéo capturée et d'informations relatives à un objet indiquant un objet inclus dans la vidéo capturée ;
une étape (S404) d'acquisition, en tant qu'image cible de recherche comprenant un objet cible de recherche, d'une image d'objet désignée en fonction d'une opération d'un chercheur parmi des images d'objet incluses dans la vidéo capturée,
une étape (S408) de définition de l'image cible de recherche ;
une étape (S406) de conversion de l'image d'objet acquise en une pluralité des images converties vues depuis des points de vue facultatifs,
une étape (S412) de détection, en tant que candidat cible de recherche, d'un objet inclus dans la vidéo capturée qui correspond à une image convertie des images converties en comparant l'image convertie à l'objet inclus dans la vidéo capturée et
une étape (S414) de détermination si une partie du candidat cible de recherche détecté est cachée par un objet périphérique ;
une étape (S420) de création d'une vidéo de comparaison à comparer afin de rechercher l'objet cible de recherche à l'aide d'une image montrant l'objet périphérique dans la vidéo capturée dans un cas où il est déterminé qu'une partie du candidat cible de recherche est cachée par l'objet périphérique ;
une étape (S422) de transmission de la vidéo de comparaison au dispositif terminal d'un chercheur dans un cas où une partie du candidat cible de recherche est cachée par l'objet périphérique ; et
une étape (S416) de transmission de l'image convertie qui correspond à la vidéo capturée au dispositif terminal d'un chercheur dans un cas où une partie du candidat cible de recherche n'est pas cachée par l'objet périphérique.

7. Programme amenant un ordinateur monté sur un dispositif d'aide à la recherche à exécuter :
une étape (S100) d'acquisition d'une image cible de recherche comprenant un objet cible de recherche à partir d'un autre dispositif et de définition de l'image cible de recherche ;
une étape (S104) d'acquisition d'une vidéo capturée et d'informations relatives à un objet indiquant un objet inclus dans la vidéo capturée ;
une étape (S102) de conversion de l'image cible de recherche définie en images converties vues depuis des points de vue facultatifs ;
une étape (S106) de détection, en tant que candidat cible de recherche, d'un objet inclus dans la vidéo capturée qui correspond à une image convertie des images converties en comparant l'image convertie à partir du candidat cible de recherche à l'objet inclus dans la vidéo capturée ;
une étape (S108) de détermination si une partie du candidat cible de recherche détecté est cachée par un objet périphérique ;
une étape (S112) de création d'une vidéo de comparaison à comparer afin de rechercher l'objet cible de recherche à l'aide d'une image montrant l'objet périphérique dans la vidéo capturée dans un cas où il est déterminé qu'une partie du candidat cible de recherche est cachée par l'objet périphérique ; et
une étape (S114) de recherche de l'objet cible de recherche en comparant la vidéo de comparaison créée à l'image convertie.

8. Programme amenant un ordinateur monté sur un dispositif d'aide à la recherche à exécuter :
une étape (S200) de définition d'une image cible de recherche comprenant un objet cible de recherche ;
une étape (S204) d'acquisition d'une vidéo capturée et d'informations relatives à un objet indiquant un objet inclus dans la vidéo capturée ;
une étape (S208) de détermination si une partie d'un candidat cible de recherche est ou non cachée par un objet périphérique à l'aide de l'image cible de recherche ou des informations d'objet ;
une étape (S212) de création d'une vidéo de comparaison à comparer afin de rechercher l'objet cible de recherche à l'aide d'une image montrant l'objet périphérique dans la vidéo capturée dans un cas où il est déterminé qu'une partie du candidat cible de recherche est cachée par l'objet périphérique ;
une étape (S202) de conversion de l'image cible de recherche définie en images converties vues depuis des points de vue facultatifs ;
une étape (S212) de création, en tant que vidéo de comparaison, d'une image composite en combinant l'image montrant l'objet périphérique qui cache une partie du candidat cible de recherche et l'image convertie ; et
une étape (S214) de recherche de l'objet cible de recherche en comparant l'objet inclus dans la vidéo capturée à l'image composite créée.

9. Programme amenant un ordinateur monté sur un dispositif d'aide à la recherche à exécuter :
une étape (S408) d'acquisition d'une vidéo capturée et d'informations relatives à un objet indiquant un objet inclus dans la vidéo capturée ;
une étape (S404) d'acquisition, en tant qu'image cible de recherche comprenant un objet cible de recherche, d'une image d'objet désignée en fonction d'une opération d'un chercheur parmi des images d'objet incluses dans la vidéo capturée,
une étape (S408) de définition de l'image cible de recherche ;
une étape (S406) de conversion de l'image d'objet acquise en une pluralité des images converties vues depuis des points de vue facultatifs,
une étape (S412) de détection, en tant que candidat cible de recherche, d'un objet inclus dans la vidéo capturée qui correspond à une image convertie des images converties en comparant l'image convertie à l'objet inclus dans la vidéo capturée et
une étape (S414) de détermination si une partie du candidat cible de recherche détecté est cachée par un objet périphérique ;
une étape (S420) de création d'une vidéo de comparaison à comparer afin de rechercher l'objet cible de recherche à l'aide d'une image montrant l'objet périphérique dans la vidéo capturée dans un cas où il est déterminé qu'une partie du candidat cible de recherche est cachée par l'objet périphérique ;
une étape (S422) de transmission de la vidéo de comparaison au dispositif terminal d'un chercheur dans un cas où une partie du candidat cible de recherche est cachée par l'objet périphérique ; et
une étape (S416) de transmission de l'image convertie qui correspond à la vidéo capturée au dispositif terminal d'un chercheur dans un cas où une partie du candidat cible de recherche n'est pas cachée par l'objet périphérique.

10. Système d'aide à la recherche comprenant :
un dispositif d'imagerie (210) configuré pour générer une vidéo capturée ;
un dispositif de génération d'informations d'objet (216) configuré pour générer des informations d'objet indiquant un objet inclus dans la vidéo capturée ; et
un dispositif d'aide à la recherche (100) comprenant
une unité de définition configurée pour définir une image cible de recherche comprenant un objet cible de recherche,
une unité de détermination configurée pour déterminer si une partie d'un candidat cible de recherche est ou non cachée par un objet périphérique à l'aide de l'image cible de recherche ou des informations d'objet, et
une unité de création vidéo configurée pour créer une vidéo de comparaison à comparer afin de rechercher l'objet cible de recherche à l'aide d'une image montrant l'objet périphérique dans la vidéo capturée dans un cas où l'unité de détermination détermine qu'une partie du candidat cible de recherche est cachée par l'objet périphérique.

11. Système d'aide à la recherche comprenant :
un dispositif d'imagerie (210) configuré pour générer une vidéo capturée ;
un dispositif de génération d'informations d'objet (216) configuré pour générer des informations d'objet indiquant un objet inclus dans la vidéo capturée ; et
un dispositif d'aide à la recherche (100B) comprenant
une unité de définition (110) configurée pour définir une image cible de recherche comprenant un objet cible de recherche,
une unité de détermination (114) configurée pour déterminer si une partie d'un candidat cible de recherche est ou non cachée par un objet périphérique à l'aide de l'image cible de recherche ou des informations d'objet,
une unité de création vidéo (116) configurée pour créer une vidéo de comparaison à comparer afin de rechercher l'objet cible de recherche à l'aide d'une image montrant l'objet périphérique dans la vidéo capturée dans un cas où l'unité de détermination (114) détermine qu'une partie du candidat cible de recherche est cachée par l'objet périphérique,
une unité de conversion (112) configurée pour convertir l'image cible de recherche définie par l'unité de définition (110) en images converties vues depuis des points de vue facultatifs, et
une unité de recherche (122),
dans lequel l'unité de création vidéo (116) comprend une unité de combinaison (120) configurée pour créer, en tant que vidéo de comparaison, une image composite en combinant l'image montrant l'objet périphérique qui cache une partie du candidat cible de recherche et l'image convertie, et
dans lequel l'unité de recherche (122) est configurée pour rechercher l'objet cible de recherche en comparant l'objet inclus dans la vidéo capturée à l'image composite créée par l'unité de combinaison (120).

12. Système d'aide à la recherche comprenant :
un dispositif d'imagerie (210) configuré pour générer une vidéo capturée ;
un dispositif de génération d'informations d'objet (216) configuré pour générer des informations d'objet indiquant un objet inclus dans la vidéo capturée ; et
un dispositif d'aide à la recherche (100D) comprenant
une unité de définition (110#) configurée pour définir une image cible de recherche comprenant un objet cible de recherche ;
une unité de détermination (114#) configurée pour déterminer si une partie d'un candidat cible de recherche est ou non cachée par un objet périphérique à l'aide de l'image cible de recherche ou des informations d'objet ;
une unité de création vidéo (116#) configurée pour créer une vidéo de comparaison à comparer afin de rechercher l'objet cible de recherche à l'aide d'une image montrant l'objet périphérique dans la vidéo capturée dans un cas où l'unité de détermination (114#) détermine qu'une partie du candidat cible de recherche est cachée par l'objet périphérique ;
une unité de conversion (112#) configurée pour convertir l'image cible de recherche définie par l'unité de définition (110#) en images converties vues depuis des points de vue facultatifs, et
une unité de communication (104#),
dans lequel l'unité de définition (110#) comprend une unité d'acquisition d'image cible (110a) configurée pour acquérir, en tant qu'image cible de recherche, une image d'objet désignée en fonction d'une opération d'un chercheur parmi des images d'objet incluses dans la vidéo capturée,
dans lequel l'unité de conversion (112#) est configurée pour convertir l'image d'objet acquise par l'unité d'acquisition d'image cible (110a) en une pluralité des images converties,
dans lequel l'unité de détermination (114#) est configurée pour détecter, en tant que candidat cible de recherche, un objet inclus dans la vidéo capturée qui correspond à une image convertie des images converties en comparant l'image convertie par l'unité de conversion (112#) à l'objet inclus dans la vidéo capturée et déterminer si une partie du candidat cible de recherche détecté est ou non cachée par un objet périphérique,
dans lequel l'unité de création vidéo (116#) est configurée pour transmettre la vidéo de comparaison au dispositif terminal d'un chercheur dans un cas où une partie du candidat cible de recherche est cachée par l'objet périphérique, et
dans lequel l'unité de communication (104#) est configurée pour transmettre l'image convertie qui correspond à la vidéo capturée au dispositif terminal du chercheur dans un cas où une partie du candidat cible de recherche n'est pas cachée par l'objet périphérique.
